# FASCICULE DE BREVET EUROPEEN

(11) **EP 4 066 461 B1**
(45) Date de publication et mention de la délivrance du brevet: **27.12.2023**
(21) Numéro de dépôt: 20824313.9
(22) Date de dépôt: 26.11.2020
(51) Int. Cl.: H04L 9/40, G06F 21/55, G06F 21/57

(54) **PROCÉDÉ DE COORDINATION DE LA MITIGATION D'UNE ATTAQUE INFORMATIQUE, DISPOSITIF ET SYSTÈME ASSOCIÉS**
VERFAHREN, VORRICHTUNG UND SYSTEM ZUR KOORDINIERUNG DER ABSCHWÄCHUNG VON NETZWERKANGRIFFE
METHOD, DEVICE AND SYSTEM FOR COORDINATING THE MITIGATION OF NETWORK ATTACKS

(30) Priorité: 29.11.2019 FR 1913501
(43) Date de publication de la demande: 05.10.2022
(73) Titulaire: Orange, 92130 Issy-les-Moulineaux (FR)
(72) Inventeur: BOUCADAIR, Mohamed, 92326 CHÂTILLON CEDEX (FR); JACQUENET, Christian, 92326 CHATILLON (FR)
(86) Numéro de dépôt international: PCT/FR2020/052194
(87) Numéro de publication internationale: WO 2021/105626

(56) Documents cités:
- WO-A1-2016/014593
- US-B1- 9 390 285

## Description

### Technique antérieure

L'invention se rapporte au domaine général des télécommunications.

Elle concerne plus particulièrement la résolution d'attaques informatiques susceptibles d'affecter les ressources d'un domaine informatique bénéficiant d'une connectivité au réseau public Internet.

L'invention s'applique notamment aux attaques informatiques de type déni de service (DoS, (pour « Denial of Service » en anglais) ou DDoS (pour « Distributed DoS » en anglais). Une attaque DoS est une tentative de rendre des ressources d'un domaine informatique, telles que par exemple des ressources réseau ou de calcul, indisponibles pour leurs utilisateurs.

Les attaques DDoS sont souvent massives et de nature à compromettre plusieurs centaines de milliers d'équipements utilisateurs (terminaux fixes ou mobiles, objets connectés, serveurs, ressources réseau, etc.), qui peuvent à leur tour être utilisés comme relais pour amplifier le pouvoir de nuisance de ces attaques. A titre indicatif, la société Symantec, dans son rapport annuel de 2019, fait état de près de 24000 applications embarquées dans des terminaux mobiles bloquées quotidiennement par de telles attaques, d'une augmentation de 600% entre 2016 et 2017 des attaques ciblant des objets connectés, et d'une augmentation de la volumétrie du trafic d'attaque entre 2016 et 2017 qui représentait 5% du trafic web global en 2016 contre 7.8% en 2017.

Les attaques DDoS sont de plus en plus fréquentes et intenses. Elles sont en outre protéiformes, tant par leur dimensionnement (volumétrie du trafic de l'attaque, amplitude de l'attaque, etc.) que par leur portée de nuisance (une seule machine visée, ou plusieurs en visant le réseau local d'une entreprise, le réseau d'un opérateur, etc.). Les cibles de ces attaques ou les relais utilisés pour les propager sont en outre extrêmement variés : terminaux fixes ou mobiles, objets connectés, serveurs, ressources réseau, etc.

Pour protéger leurs ressources informatiques contre de telles attaques, de nombreuses sociétés souscrivent à des offres de services de protection DPS (pour « DDoS Protection Services » en anglais). Toutefois, lorsqu'autant de machines sont impliquées dans l'exécution des attaques, la mise en place de politiques de filtrage adaptées, c'est-à-dire capables d'isoler le trafic en provenance de l'ensemble des machines affectées, est d'autant plus compliquée que ces machines peuvent être réparties sur plusieurs réseaux distincts. Ces réseaux sont eux-mêmes susceptibles d'être protégés par des offres DPS distinctes proposées et gérées par des entités administratives distinctes et indépendantes. Il convient par ailleurs de noter que de plus en plus d'offres de protection DPS s'appuient sur des services hébergés dans le « cloud » et pas seulement au sein des infrastructures exploitées par les fournisseurs d'accès au réseau Internet.

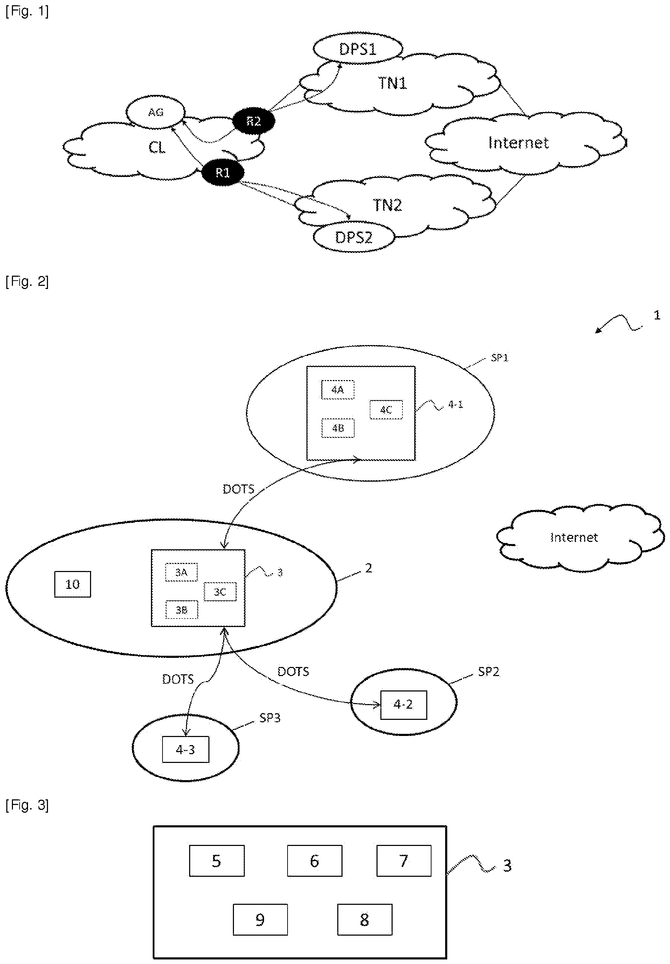

La **figure 1** représente, à titre illustratif, un domaine informatique client CL connecté à deux réseaux transitaires TN1 et TN2 lui fournissant un accès au réseau Internet.

Chaque réseau transitaire héberge un service de protection DPS dédié protégeant le domaine informatique client. Ce service de protection DPS est référencé par DPS1 pour le réseau transitaire TN1, et par DPS2 pour le réseau transitaire TN2. On suppose, dans l'exemple de la figure 1 que les réseaux transitaires TN1 et TN2 sont gérés par des entités administratives distinctes (par exemple par des opérateurs distincts). Ainsi, les services de protection DPS1 et DPS2 n'ont aucune visibilité mutuelle (c'est-à-dire aucune connaissance) quant aux actions de mitigation mises en oeuvre par l'un et l'autre des services de protection contre une attaque informatique ciblant les ressources du domaine informatique client (ou domaine client) CL protégées par ces services de protection. Cette absence de visibilité peut conduire à un manque d'efficacité de l'action combinée des deux services de protection.

A titre illustratif, supposons que sur détection d'une attaque affectant une ou plusieurs ressources du domaine informatique client CL, un agent AG du domaine informatique client CL sollicite les deux services de protection DPS1 et DPS2 pour la résolution de l'attaque. Comme mentionné précédemment, ces services de protection protègent le domaine informatique client, et notamment les liens d'interconnexion raccordant le domaine client CL aux réseaux transitaires TN1 et TN2, liens qui sont impliqués dans l'acheminement du trafic de l'attaque (on note que ces liens ne sont pas forcément la cible de l'attaque).

Suite à la sollicitation de l'agent AG, chacun des services DPS1 et DPS2 met en oeuvre un plan de mitigation contre l'attaque détectée, comprenant ici des actions de redirection du trafic entrant dans le domaine informatique client CL. Par exemple, le service DPS1 active une politique de redirection du trafic vers le lien d'interconnexion R1, tandis que le service DPS2 active une politique de redirection du trafic vers le lien d'interconnexion R2.

Ce faisant, une boucle de routage est créée entre les routeurs R1 et R2, et le trafic légitime ne peut plus être acheminé vers le domaine client CL.

Une telle situation est bien entendu préjudiciable à la résolution des attaques informatiques subies par un domaine informatique. On note que les considérations précédentes ne se limitent pas aux attaques DDoS, et restent valables pour d'autres types d'attaques, telles que des attaques par usurpation d'identité (par exemple à des fins de vol de données), des malwares de rançonnage (ou « ransomware » en anglais), etc.
Le document US 9,390,285 décrit un procédé et un système permettant d'identifier des politiques de sécurité incohérentes. Le document WO 2016/014593 décrit un client de sécurité d'un dispositif mobile apte à surveiller et à détecter des incohérences dans la sécurité du dispositif.

### Exposé de l'invention

L'invention permet notamment de remédier aux inconvénients de l'état de la technique en proposant un procédé de coordination mis en oeuvre par un dispositif gérant des ressources d'un domaine informatique protégées par une pluralité de services de protection contre des attaques informatiques, ledit procédé comprenant :
- une étape d'obtention de plans de mitigation mis en place par des services de protection de ladite pluralité de services de protection en réponse à une attaque informatique ciblant au moins une desdites ressources du domaine informatique ; et
- suite à une détection d'au moins une incompatibilité entre des plans de mitigation obtenus, une étape de coordination d'un ajustement de tout ou partie desdits plans de mitigation incompatibles auprès des services de protection ayant mis en place lesdits plans de mitigation incompatibles de sorte à éliminer ladite au moins une incompatibilité.

Corrélativement, l'invention vise aussi un dispositif gérant des ressources d'un domaine informatique, ledit dispositif étant configuré pour communiquer avec une pluralité de services de protection contre des attaques informatiques protégeant les ressources du domaine informatique, ledit dispositif comprenant :
- un module d'obtention, configuré pour obtenir des plans de mitigation mis en place par des services de protection de ladite pluralité de services de protection en réponse à une attaque informatique ciblant au moins une des ressources du domaine informatique ;
- un module de détection, configuré pour détecter l'existence d'au moins une incompatibilité entre des plans de mitigation obtenus ; et
- un module de coordination, configuré pour coordonner un ajustement de tout ou partie desdits plans de mitigation incompatibles auprès des services de protection ayant mis en place les plans de mitigation incompatibles, de sorte à éliminer ladite au moins une incompatibilité.

Dans la suite, on appelle « plan de mitigation » l'ensemble des actions mises en place par un service de protection pour la résolution d'une attaque. Ces actions permettent plus particulièrement d'empêcher le trafic de l'attaque de se propager pour affecter une cible donnée. Aucune limitation n'est attachée à la nature des ressources qui peuvent être la cible d'une attaque ; il peut s'agir par exemple d'une adresse IP, d'un préfixe IP, d'une machine, d'un alias, d'un nom de domaine pleinement qualifié (FQDN pour Fully Qualified Domain Name en anglais), etc.

Par incompatibilité, on entend ici que les plans de mitigation considérés comprennent des actions incohérentes entre elles ou qui sont susceptibles de conduire à des anomalies dans le traitement du trafic entrant et/ou sortant du domaine informatique, notamment lorsqu'elles sont considérées de façon combinée, résultant en un traitement inapproprié voire inefficace de l'attaque et au risque de pénaliser le bon fonctionnement des services nominaux du domaine informatique client.

Par exemple, une telle incompatibilité peut provenir de l'application par deux services de protection distincts de règles de mitigation provoquant une boucle de routage, telle que décrite précédemment en référence à la figure 1.

Selon un autre exemple, une incompatibilité peut provenir de l'application par un service de protection d'une règle générique dont le but est de limiter tout le trafic destiné au domaine informatique alors que d'autres services de protection ont mis en place des filtres sélectifs qui épargnent le trafic légitime (c'est-à-dire non corrompu par l'attaque).

Selon un autre exemple encore, dans le contexte d'un domaine client ne supportant qu'une connectivité IPv4 (respectivement IPv6) et ne mettant pas en oeuvre de mécanisme de traduction d'adresses IPv6 en adresses IPv4 (respectivement d'adresses IPv4 en adresses IPv6), les services de protection protégeant le domaine client doivent mettre en place des plans de mitigation ne portant que sur une même famille d'adresses (IPv4 ou IPv6). Une incompatibilité est donc détectée lorsque le dispositif gérant les ressources du domaine informatique est informé qu'un premier service de protection applique un filtre n'impliquant que des adresses IPv4 (respectivement IPv6) alors qu'un deuxième service de protection applique un filtre n'impliquant que des adresses IPv6.

Selon un autre exemple encore, une incompatibilité peut être détectée lorsque les actions de mitigation exécutées selon deux plans de mitigation distincts comprennent des règles de filtrage s'appliquant à des protocoles distincts alors qu'elles concernent le même trafic d'attaque, etc.

Ces divers exemples d'incompatibilité ne sont bien entendu donnés qu'à titre illustratif. Aucune limitation n'est attachée au type d'incompatibilité pouvant être détectée par le dispositif du domaine informatique.

Ainsi, l'invention propose une coordination des actions de mitigation mises en place, le cas échéant, contre une attaque informatique ciblant une ou des ressources d'un domaine informatique par des services de protection pouvant être gérés par des entités administratives distinctes et souscrits par le domaine informatique pour protéger ses ressources. On désigne dans la suite de la description, le domaine informatique considéré par domaine « client » ou domaine informatique client.

Cette coordination des actions de mitigation est avantageusement opérée, conformément à l'invention, par un dispositif gérant les ressources du domaine informatique client désigné ici, par souci de simplification, par « dispositif client ». Un tel dispositif client est une entité fonctionnelle, apte à exécuter des actions pour des ressources du domaine informatique client qu'il gère. Il peut être embarqué physiquement dans un élément réseau du domaine informatique client, ou dans un élément (de confiance) autorisé à contrôler le domaine informatique client par le propriétaire ou l'administrateur de ce dernier (par exemple un réseau de contrôle dédié, un téléphone mobile d'un administrateur du domaine informatique).

Avantageusement, le domaine informatique client, et plus spécifiquement le dispositif client gérant les ressources du domaine informatique client, peut disposer aisément d'une connaissance des différentes actions de mitigation mises en place par les différents services de protection protégeant les ressources du domaine informatique client gérées par ce dispositif, de sorte que ledit dispositif peut facilement et efficacement coordonner ces actions. Grâce à cette visibilité, le dispositif client peut en effet d'une part, détecter l'existence d'actions de mitigation incompatibles entre elles et mises en place par deux (ou plus) services de protection, et d'autre part, coordonner l'ajustement de ces actions de mitigation jugées incompatibles pour résoudre cette incompatibilité. Il résulte de cette coordination par le dispositif client une résolution rapide et fiable des attaques informatiques ciblant les ressources qu'il gère.

Grâce à l'invention, la gestion de l'attaque affectant le domaine informatique est donc améliorée par rapport à l'état de la technique, car elle est menée de façon globale en incluant à la fois l'ensemble des services DPS concernés et le domaine client à l'origine de la ou des action(s) de coordination.

Le pilotage de cette coordination par le domaine informatique lui-même (par le biais du dispositif client) permet en outre de respecter le périmètre d'action de chaque service de protection, et de s'accommoder de l'absence de connaissance mutuelle des actions de mitigation mises en places par les différents services de protection. Il n'est pas nécessaire de modifier ce périmètre ni la visibilité dont disposent les services de protection sur le trafic entrant/sortant du domaine informatique pour avoir une action efficace contre l'attaque détectée au sein de celui-ci. En d'autres termes, les différents services de protection continuent de n'avoir le cas échéant qu'une visibilité partielle du trafic associé au domaine client et non du trafic global du domaine client. En référence à la figure 1, le service de protection DPS1 (ou DPS2) n'a que la visibilité du trafic acheminé par le lien d'interconnexion géré par TN1 (ou TN2).

L'invention offre ainsi une solution efficace permettant de traiter de façon fiable et automatique les attaques informatiques ciblant des ressources d'un domaine informatique protégées par plusieurs services de protection gérés par des entités administratives distinctes. On s'assure ainsi de pouvoir traiter les attaques affectant l'ensemble des ressources du domaine informatique et de garantir la continuité des services offerts ou souscrits par le domaine informatique.

On note qu'aucune limitation n'est attachée à la nature des attaques informatiques auxquelles s'applique l'invention (déni de service, usurpation d'identité, ransomware, etc.), ni à la nature des ressources du domaine informatique impactées (ressources de calcul, ressources réseau, liens d'interconnexion avec d'autres réseaux, etc.).

Dans un mode particulier de réalisation, l'étape de coordination comprend :
- l'envoi à au moins un service de protection ayant mis en place un plan de mitigation incompatible, d'une requête d'ajustement de ce plan de mitigation incompatible, ladite requête comprenant au moins une information caractérisant ladite au moins une incompatibilité détectée ;
- suite à l'obtention d'au moins un plan de mitigation ajusté, une étape de vérification de sa compatibilité avec les autres plans de mitigation obtenus ;
les étapes d'envoi et de vérification étant réitérées tant qu'une incompatibilité entre des plans de mitigation obtenus subsiste.

Le ou les services de protection contactés par le dispositif client et tenus d'ajuster leurs plans de mitigation peuvent être notamment sélectionnés selon une efficacité de ces plans de mitigation.

Par exemple, le dispositif client gérant les ressources du domaine informatique peut envoyer une requête d'ajustement au(x) service(s) de protection présentant le(s) plan(s) de mitigation le(s) moins efficace(s) pour lutter contre l'attaque détectée. Une telle efficacité peut être appréciée par le dispositif client à partir d'informations locales dont il dispose, comme par exemple l'analyse de relevés d'échantillons IPFIX (IP Flow Information Export) depuis des routeurs d'interconnexion, des compteurs de fragments ou de nombre d'erreurs observés sur certains routeurs, ou du temps de connexion à un service. A noter que la fonction d'analyse peut être aussi fournie par un élément fonctionnel externe qui s'interface avec le dispositif client (par exemple, un module de télémétrie).

Ce mode de réalisation permet de limiter les ajustements effectués, ainsi que les vérifications opérées par le dispositif client suite aux ajustements pour s'assurer de la compatibilité des actions de mitigation mises en place contre l'attaque. On note que ce mode de réalisation s'applique préférentiellement lorsque le service de protection contacté est en mesure de proposer un ajustement du plan de mitigation permettant d'éliminer rapidement l'incompatibilité. De la sorte, une convergence rapide vers une action coordonnée des services de protection contre l'attaque détectée peut être obtenue.

Dans un autre mode de réalisation, la requête d'ajustement est envoyée à tous les services de protection ayant mis en place les plans de mitigation incompatibles.

En d'autres termes, dans ce mode de réalisation, c'est le procédé de traitement de l'attaque qui est revu par chaque service de protection. Dans certains contextes, il se peut que la convergence vers des plans compatibles entre eux soit difficile à obtenir. La coordination des services de protection peut donc prendre, dans ce mode de réalisation, plus de temps que dans le mode de réalisation précédent. Toutefois, ce mode de réalisation présente un intérêt lorsqu'on présume qu'un ajustement des plans de mitigation de tout ou partie des services de protection est requis.

On note que le dispositif client peut être configuré pour être en mesure de mettre en oeuvre ces modes de réalisation, et choisir l'un ou l'autre de ces modes de réalisation en fonction de l'attaque détectée et/ou de l'incompatibilité (ou des incompatibilités) observées.

Dans un mode particulier de réalisation, ladite au moins une information comprise dans la requête d'ajustement envoyée à un service de protection comprend au moins une référence à une règle du plan de mitigation mis en place par ce service de protection à l'origine de l'incompatibilité détectée.

Une telle référence peut être notamment un identifiant, un nom de règle, ou la caractérisation technique d'une règle.

Ceci facilite l'ajustement du plan de mitigation par le service de protection recevant la requête d'ajustement, qui peut adapter plus efficacement et plus rapidement ses actions de mitigation pour éliminer l'incompatibilité détectée.

La requête d'ajustement peut comprendre d'autres informations visant à caractériser l'incompatibilité et à permettre au service de protection contacté d'ajuster efficacement son plan de mitigation pour faire disparaître cette incompatibilité (sans en créer d'autres par ailleurs si possible). Par exemple, la requête peut inclure un code d'erreur spécifique pour caractériser davantage l'incompatibilité ('0' : boucle de routage, '1' : règle de filtrage trop générique, '2' : famille d'adresses inappropriée, ...). Selon le code d'erreur renvoyé, des informations supplémentaires peuvent être communiquées, comme par exemple dans le cas du code '0', la requête peut comprendre une description permettant d'identifier la boucle de routage (par exemple, dans le contexte de la figure 1, loop_node=R1, loop_node=R2).

Dans un mode particulier de réalisation, le procédé comprend en outre :
- une étape de détection d'une mise à jour d'au moins un des plans de mitigation obtenus ; et
- une étape de vérification d'une compatibilité de ladite mise à jour avec les autres plans de mitigation obtenus.

Ce mode de réalisation permet de tenir compte de l'évolution dynamique de certains plans de mitigation, par exemple pour s'adapter à l'attaque détectée.

La détection d'une telle mise à jour peut être effectuée de différentes manières.

Elle peut notamment s'appuyer sur l'envoi par le dispositif client à au moins un service de protection ayant mis en place un plan de mitigation contre l'attaque d'un message de vérification si une mise à jour de ce plan de mitigation a été effectuée. Un tel message peut être notamment envoyé par le dispositif client audit au moins un service de protection à fréquence régulière, pour être informé au plus vite de l'existence d'une modification d'un plan de mitigation et pouvoir intervenir rapidement si une telle modification est incompatible avec d'autres plans de mitigation déjà mis en place.

Dans cette variante de réalisation, c'est donc le dispositif client qui sollicite les services de protection pour déterminer s'ils ont effectué des modifications de leurs plans de mitigation.

Selon une autre variante, le dispositif client peut être informé d'une mise à jour d'un plan de mitigation à l'initiative du service de protection ayant effectué ladite mise à jour.

A cet effet, le dispositif client peut souscrire à un service de notification des modifications effectuées sur les plans de mitigation mis en place par les services de protection, par exemple auprès de ces services de protection.

Dans cette variante, on limite avantageusement les échanges entre le dispositif client et les services de protection. Le dispositif client peut détecter des anomalies dans le traitement de l'attaque en analysant les différentes mises à jour des actions exécutées par les services de protection et peut réagir de manière rapide pour coordonner ces actions. Cette variante facilite par ailleurs le diagnostic d'une attaque.

Dans un mode particulier de réalisation, le procédé comprend en outre :
- une étape de détermination d'une incapacité d'un service de protection de ladite pluralité de services de protection à traiter ladite attaque informatique ;
- une étape d'élaboration d'un plan de mitigation de ladite attaque à partir :
   ▪ d'un des plans de mitigation obtenus ; et/ou
   ▪ d'une assistance fournie par au moins un service de protection de ladite pluralité de services de protection ; et
- une étape de transmission du plan de mitigation élaboré au service de protection présentant ladite incapacité pour lui permettre de traiter ladite attaque.

Ce mode de réalisation permet de fournir dynamiquement une assistance à un service de protection incapable de traiter une attaque informatique détectée dans le domaine informatique. Cette assistance se traduit sous la forme d'un plan de mitigation élaboré et fourni par le dispositif client au service de protection incapable, à partir d'un plan de mitigation proposé par un autre service de protection en réponse à l'attaque, ou s'appuyant sur l'assistance d'au moins un autre service de protection, permettant ainsi de remédier à une insuffisance fonctionnelle ou capacitaire du service de protection incapable.

Il convient de noter que ce mode de réalisation ne se limite pas à une application locale au sein du domaine informatique, par le dispositif client, du plan de mitigation élaboré pour pallier l'insuffisance du service de protection incapable, application qui n'est pas toujours possible selon l'état des ressources affectées par l'attaque. Mais ce mode de réalisation prévoit également la transmission du plan de mitigation élaboré au service de protection incapable pour qu'il soit en mesure de pallier ses carences et de résoudre l'attaque. Cela offre la possibilité, lorsque le service de protection protège des liens d'interconnexion du domaine informatique avec le réseau Internet ou avec des réseaux transitaires, de bloquer de manière anticipée le trafic de l'attaque, en amont et/ou en entrée du domaine informatique client.

Au vu de ce qui précède, l'invention s'appuie non seulement sur l'action de coordination du dispositif client gérant les ressources du domaine informatique protégées par les différents services de protection, mais également sur l'action de ces derniers lorsqu'ils sont sollicités le cas échéant par le dispositif client pour ajuster leurs plans de mitigation ou pour fournir une assistance à l'un d'entre eux, lorsqu'il est incapable de traiter l'attaque.

Ainsi, selon un autre aspect, l'invention vise également un procédé de mitigation, par un premier service de protection d'une pluralité de services de protection contre des attaques informatiques protégeant des ressources d'un domaine informatique, ledit procédé comprenant :
- une étape de mise en place d'un plan de mitigation contre une attaque informatique ciblant au moins une desdites ressources du domaine informatique ;
- suite à au moins une incompatibilité détectée par un dispositif gérant lesdites ressources du domaine informatique entre ledit plan de mitigation et au moins un autre plan de mitigation mis en place contre ladite attaque informatique par un deuxième service de protection de ladite pluralité de services de protection :
   ▪ une étape d'ajustement du plan de mitigation mis en place par le premier service de protection pour éliminer ladite au moins une incompatibilité détectée ; et
   ▪ une étape d'envoi du plan de mitigation ajusté au dispositif gérant les ressources du domaine informatique.

Corrélativement, l'invention concerne aussi un dispositif d'un premier service de protection d'une pluralité de services de protection contre des attaques informatiques protégeant des ressources d'un domaine informatique, ledit dispositif comprenant :
- un module d'application configuré pour mettre en place un plan de mitigation contre une attaque ciblant au moins une desdites ressources du domaine informatique ;
- un module d'ajustement et un module d'envoi, activés suite à une détection par un dispositif gérant lesdites ressources du domaine informatique, d'au moins une incompatibilité entre ledit plan de mitigation et au moins un autre plan de mitigation mis en place contre ladite attaque informatique par un deuxième service de protection de ladite pluralité de services de protection, ledit module d'ajustement étant configuré pour ajuster le plan de mitigation mis en place par le premier service de protection afin d'éliminer ladite au moins une incompatibilité, et ledit module d'envoi étant configuré pour envoyer le plan de mitigation ajusté au dispositif gérant les ressources du domaine informatique.

Le procédé de mitigation et le dispositif du premier service de protection bénéficient des mêmes avantages cités précédemment que le procédé de coordination et le dispositif gérant les ressources du domaine informatique.

Dans un mode particulier de réalisation privilégié, le plan de mitigation ajusté est mis en place sans délai par le premier service de protection, autrement dit, dès son élaboration.

Ceci permet de s'assurer de l'application continue d'actions de mitigation contre l'attaque par le premier service de protection.

Dans un autre mode particulier de réalisation, le premier service de protection met en place le plan de mitigation ajusté suite à une vérification par le dispositif gérant les ressources du domaine informatique d'une compatibilité du plan de mitigation ajusté avec d'autres plans de mitigation mis en place contre ladite attaque.

Dans un mode particulier de réalisation, le procédé de mitigation comprend :
- une étape de mise à jour du plan de mitigation mis en place par le premier service de protection ; et
- une étape de notification de ladite mise à jour au dispositif gérant les ressources du domaine informatique.

Dans un mode particulier de réalisation de l'invention, le procédé de coordination et/ou le procédé de mitigation sont mis en oeuvre par un ordinateur. L'ordinateur mettant en oeuvre les étapes du procédé de coordination peut être connecté directement ou non au domaine informatique ; il peut s'agir d'une ressource à part entière du domaine informatique ou d'une entité n'appartenant pas directement au domaine informatique, comme par exemple un téléphone intelligent (ou « smartphone » en anglais) apte à gérer les ressources du domaine informatique.

L'invention vise également un premier programme d'ordinateur sur un support d'enregistrement, ce programme étant susceptible d'être mis en oeuvre dans un ordinateur ou plus généralement dans un dispositif gérant les ressources d'un domaine informatique client conforme à l'invention et comporte des instructions adaptées à la mise en oeuvre d'un procédé de coordination tel que décrit ci-dessus.

L'invention vise aussi un deuxième programme d'ordinateur sur un support d'enregistrement, ce programme étant susceptible d'être mis en oeuvre dans un ordinateur ou plus généralement dans un dispositif d'un service de protection contre des attaques informatiques conforme à l'invention et comporte des instructions adaptées à la mise en oeuvre d'un procédé de mitigation tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier, du deuxième ou du troisième programme d'ordinateur mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution du procédé de coordination, conforme à l'invention, ou du procédé de mitigation, conforme à l'invention.

L'invention vise aussi un système de protection d'un domaine informatique comprenant :
- une pluralité de services de protection des ressources du domaine informatique contre des attaques informatiques ;
- un dispositif gérant les ressources du domaine informatique, conforme à l'invention, et configuré pour communiquer avec ces services de protection ;
dans lequel au moins un des services de protection comprend un dispositif selon l'invention.

Le système selon l'invention bénéficie des mêmes avantages cités précédemment pour le procédé de coordination, le procédé de mitigation, le dispositif gérant les ressources du domaine informatique et le dispositif du service de protection selon l'invention.

On peut également envisager, dans d'autres modes de réalisation, que le procédé de coordination, le procédé de mitigation, le dispositif gérant les ressources du domaine informatique, le dispositif du service de protection et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1, déjà décrite, représente un domaine informatique protégé par deux services de protection contre des attaques informatiques, selon l'état de la technique ;
[Fig. 2] la figure 2 représente un système de protection d'un domaine informatique conforme à l'invention dans un mode particulier de réalisation ;
[Fig. 3] la figure 3 représente l'architecture matérielle d'un dispositif client du système de protection de la figure 2, dans un mode particulier de réalisation ;
[Fig. 4] la figure 4 représente l'architecture matérielle d'un dispositif serveur d'un service de protection du système de protection de la figure 2, dans un mode particulier de réalisation ;
[Fig. 5] la figure 5 représente les principales étapes d'un procédé de coordination selon l'invention telles qu'elles sont mises en oeuvre, dans un mode particulier de réalisation, par un dispositif client du système de protection de la figure 2 ; et
[Fig. 6] la figure 6 représente les principales étapes d'un procédé de mitigation selon l'invention telles qu'elles sont mises en oeuvre, dans un mode particulier de réalisation, par un dispositif serveur du système de protection de la figure 2.

### Description de l'invention

La **figure 2** représente un système 1 de protection d'un domaine informatique 2 contre des attaques informatiques, conforme à l'invention, dans un mode particulier de réalisation.

On entend ici par domaine informatique, aussi désigné par domaine informatique client ou domaine client, un ensemble de ressources informatiques (incluant notamment des ressources réseaux telles que des routeurs, commutateurs, serveurs, terminaux, etc.), placées sous la responsabilité d'une entité administrative donnée. Un tel domaine informatique est par exemple un réseau d'entreprise, un réseau domestique ou un système autonome (AS, pour « Autonomous System ») utilisant le protocole BGP (pour « Border Gateway Protocol » en anglais). Toutefois, aucune limitation n'est attachée à la nature du domaine informatique 2 ni aux protocoles utilisés au sein du domaine informatique 2.

Le domaine informatique 2 est connecté au réseau public Internet, directement ou via un ou plusieurs réseaux transitaires. Il possède diverses ressources informatiques (ressources CPU, ressources mémoires, ressources réseau, liens d'interconnexion avec d'autres réseaux, etc.), protégées par une pluralité de services de protection contre des attaques informatiques SP1, SP2, ..., SPN, auxquels a souscrit l'administrateur ou le propriétaire du domaine informatique 2, N désignant un nombre entier supérieur à 1. Par souci de simplification, sur la figure 2, trois services de protection SP1, SP2 et SP3 sont représentés, toutefois le nombre N peut être un entier quelconque supérieur à 1.

Tout ou partie des services de protection SP1, SP2, ..., SPN, protégeant les ressources du domaine informatique 2, et en particulier dans l'exemple envisagé ici SP1, SP2 et SP3, sont gérés par des entités administratives (par exemple, par des opérateurs de réseaux) distinctes. En d'autres termes, chacune de ces entités administratives n'a pas de visibilité sur les actions de mitigation d'attaques mises en place par les autres entités administratives et leurs propres services de protection (c'est-à-dire pas de connaissance *a priori* de ces actions de mitigation). Dans la suite de la description, on entend par « plan de mitigation » l'ensemble des actions mises en place par un service de protection pour la résolution d'une attaque, en vue notamment d'empêcher le trafic de l'attaque de se propager pour atteindre une ou plusieurs cibles dans le domaine informatique 2.

Aucune limitation n'est attachée à la localisation des services de protection SP1, SP2, ..., SPN. Ils peuvent être hébergés sur un ou plusieurs dispositifs (par exemple sur un ou des serveurs) se trouvant dans un système informatique en nuage (plus communément désigné par « cloud »), dans le réseau Internet, ou dans des réseaux transitaires fournissant au domaine informatique client 2 un accès au réseau Internet, etc. Ainsi, par service de protection SPk, k=1, ..., N, on entend ici aussi bien le service en lui-même fourni au domaine informatique 2 que le ou les dispositifs hébergeant la logique de ce service. Aussi, aucune hypothèse n'est faite quant à la structure fonctionnelle et matérielle d'un service de protection SPk, k=1, ..., N.

On considère ici, à titre illustratif, l'exemple d'attaques de dénis de service distribués (ou DDoS) et on suppose que le domaine informatique 2 comprend une (ou plusieurs) fonctions de détection d'attaques DDoS. Les services de protection SPk, k=1, ..., N sont donc ici des services de protection DPS. Ces hypothèses ne sont toutefois pas limitatives en soi et l'invention s'applique à tout type d'attaque informatique (déni de service, usurpation d'identité, ransomware, etc.). En outre, aucune limitation n'est attachée à la nature des ressources qui peuvent être la cible d'une attaque ; il peut s'agir par exemple d'une adresse IP, d'un préfixe IP, d'une machine, d'un alias, d'un nom de domaine pleinement qualifié (FQDN pour Fully Qualified Domain Name en anglais), etc.

Dans le mode de réalisation décrit ici, le système de protection 1 s'appuie sur une architecture client/serveur DOTS (pour « DDoS Open Threat Signaling ») telle que définie par l'IETF (Internet Engineering Task Force). De façon connue, l'architecture DOTS spécifiée par l'IETF a pour objectif de fournir un mécanisme de signalisation de détection de trafic suspect voire d'attaque avérée, de sorte que des mesures de mitigation appropriées puissent être mises en oeuvre le plus rapidement possible. Plus particulièrement, elle permet à un client dit client DOTS qui gère les ressources d'un domaine informatique d'informer un serveur dit serveur DOTS de la détection d'un trafic suspect potentiellement caractéristique d'une attaque DDoS en cours et que des actions de mitigation appropriées sont requises. Le serveur DOTS peut alors mettre en place ou coordonner diverses actions pour que, par exemple, le trafic associé à l'attaque de déni de service ne soit plus acheminé vers le domaine informatique du client DOTS, et que seul le trafic consenti (c'est-à-dire légitime) soit acheminé vers ledit domaine informatique. On note que le client DOTS n'est pas nécessairement un élément réseau du domaine informatique en question, mais peut être connecté indirectement à ce dernier ; il peut s'agir par exemple d'un réseau de contrôle ou d'un terminal (par exemple, un smartphone) d'un administrateur du domaine informatique, etc.

A cet effet, deux canaux de communication DOTS sont définis entre le client DOTS et le serveur DOTS :
- un canal de signalisation DOTS (« DOTS Signal Channel », en anglais) : ce canal est utilisé seulement pendant la durée des attaques DDoS. Ainsi, le client DOTS peut utiliser ce canal pour demander de l'aide au serveur DOTS en l'informant qu'une attaque est en cours. La table 1 illustre un exemple de requête de mitigation pouvant être envoyée via un canal de signalisation DOTS « ietf-dots-signal-channel » (correspondant à une cible de l'attaque identifiée par l'attribut « ietf-dots-signal-channel:mitigation-scope» dans la table 1), par un client DOTS identifié par un identifiant unique CUID (pour « Client Unique Identifier ») « mydotsclient », à son serveur DOTS, pour l'informer que le préfixe « 1.2.3.0/24 » (identifié dans le champ « target-prefix ») subit une attaque DDoS. Sur réception d'une telle requête de mitigation (reconnaissable à la nature de la requête (PUT) et à la présence des attributs Uri-Path ("mitigate") et (« mid »)), le serveur DOTS, après vérification que ce client DOTS est autorisé à demander des actions pour le préfixe « 1.2.3.0/24 », prend les mesures adéquates pour mettre fin à l'attaque si cette demande n'est pas en conflit avec d'autres demandes provenant d'autres clients du même domaine informatique ou avec une règle de filtrage installée par un autre client DOTS du domaine, et si le serveur est habilité à/configuré pour honorer la dernière requête de mitigation reçue. En cas de conflit, le serveur renvoie un message d'erreur « 4.09 Conflict » pour informer le client ;
- un canal de données DOTS (« DOTS Data Channel » en anglais) : ce canal est utilisé si et seulement si aucune attaque n'est en cours. Le client DOTS peut par exemple utiliser ce canal pour installer des règles de filtrage (ou ACL pour « Access Control List ») telles que le filtrage du trafic reçu de certaines adresses ou destiné à une machine donnée. La table 2 fournit l'exemple d'un message envoyé sur un canal de données DOTS « draft-ietf-dots-data-channel » (correspondant à un filtre caractérisé par l'attribut « ietf-dots-data-channel:access-lists » dans la table 2), par un client DOTS ayant comme identifiant CUID « mydotsclient », demandant à un serveur DOTS de bloquer (« actions » : {"forwarding": "drop"}) tout le trafic à destination du préfixe « 1.2.3.0/24 ». Sur réception d'une telle demande (reconnaissable à la nature de la requête (POST), de la « Request-URI » (« /restconf/data/ietf-dots-data-hannel:dots-data/dots-client=mydotsclient ») et à la présence de l'attribut "ietf-dots-data-channel:access-lists"), et après vérification que ce client DOTS est autorisé à demander l'installation de règles de filtrage pour le préfixe « 1.2.3.0/24 », le serveur DOTS procède à l'installation des règles de filtrage si cette demande n'est pas en conflit avec d'autres demandes provenant d'autres clients du même domaine informatique ou avec une règle de filtrage existante. En cas de conflit avec d'autres règles maintenues par le serveur DOTS, ce dernier renvoie un message d'erreur "4.09 Conflict" pour informer le client DOTS.

Ces différents canaux sont décrits plus en détail respectivement dans les documents de T. Reddy et al. intitulé « Distributed Denial-of-Service Open Threat Signaling (DOTS) Signal Channel Specification », et de M. Boucadair et al. intitulé « Distributed Denial-of-Service Open Threat Signaling (DOTS) Data Channel Spécification », édités par l'IETF en 2019.

**[Table 1]**

| |
|---|
| ```
Header: PUT (Code=0.03)
 Uri-Host: www.example.com
 Uri-Path: ".well-known"
 Uri-Path: "dots"
 Uri-Path: "v1"
 Uri-Path: "mitigate"
 Uri-Path: "cuid=mydotsclient"
 Uri-Path: "mid=57956"
 Content-Format: "application/cbor"
             {
          "ietf-dots-signal-channel:mitigation-scope": {
            "scope": [
              {
               "target-prefix": [
                "1.2.3.0/24",
               J,
               "target-port-range": [
                {
                 "lower-port": 80
                 }
               ],
                "target-protocol": [
                 6
               ]
             }
           ]
         }
       }
``` |

**[Table 2]**

| |
|---|
| ```
POST /resfconf/data/ietf-dots-data-channel:dots-data\
      /dats-client=mydotsclient HTTP/1,1
  Hast: {host}:{port}
  Content-Type: application/yang-data-json {
   "ietf-dots-data-channel:access-lists":{
    "ad": [ {
       "name":"my-acl",
       "type": "ipv4-ad-type",
       "aces": {
        "ace": [ {
          "name": "my-example",
          "matches": {
            "I3":{
             "ipv4" {
               "destination-ipv4-network": "1.2.3.0/24"
             }
 }
 },
          "actions": {
            "forwarding": "drop"
           }
          }
         ]
        }
       }
      ]
     }
    }
``` |

DOTS est donc une architecture destinée à faciliter la prise en charge de requêtes de mitigation d'attaques émises par un client DOTS et reçues par un serveur DOTS, comme par exemple un serveur exploité par un fournisseur de service de protection contre des attaques informatiques.

On suppose ici que le domaine informatique 2 comprend un dispositif 3, conforme à l'invention, en charge de la gestion et de la surveillance de l'ensemble des ressources informatiques du domaine informatique 2, et les services de protection SP1, ..., SPN, comprennent des dispositifs 4-1, ..., 4-N respectivement, également conformes à l'invention, le dispositif 3 et les dispositifs 4-1, ..., 4-N étant susceptibles d'interagir entre eux selon les principes qui viennent d'être décrits et caractéristiques de l'architecture client/serveur DOTS. Dans ce mode de fonctionnement, le dispositif 3 agit comme un client DOTS (on le désigne par souci de simplification dans la suite par « dispositif client 3 ») et les dispositifs 4-1, 4-2, ..., 4-N comme des serveurs DOTS. L'invention s'applique toutefois à d'autres architectures et/ou à d'autres protocoles permettant aux dispositifs 3, 4-1, ..., 4-N de communiquer entre eux.

On note que par souci de simplification, dans l'exemple envisagé sur la figure 2, le dispositif client 3 et chacun des dispositifs serveurs 4-1, ..., 4-N communiquent directement entre eux (après éventuellement une authentification préalable du dispositif client DOTS 3 par le dispositif serveur DOTS considéré). En variante, les communications DOTS entre un client DOTS et un serveur DOTS peuvent se faire via des relais (ou « DOTS Gateways » en anglais). Ces relais peuvent être hébergés au sein du domaine du client DOTS (désigné aussi par « domaine client ») ou au sein du domaine du serveur (désigné aussi par « domaine serveur ») ou dans les deux. Un relai DOTS localisé dans un domaine du client est considéré par un serveur DOTS comme un client DOTS. Un relai DOTS localisé dans un domaine serveur est considéré par un client DOTS comme un serveur DOTS.

On note par ailleurs qu'en cas de présence d'un relai DOTS dans un domaine serveur, l'authentification des clients DOTS est de la responsabilité du relai. Un serveur DOTS doit être configuré avec la liste des relais DOTS actifs au sein de son domaine ; il peut alors déléguer certaines de ses fonctions à ces relais de confiance. De plus, le serveur DOTS peut utiliser en toute sécurité les informations fournies par un relai figurant dans une liste déclarée auprès du serveur DOTS et maintenue par celui-ci, moyennant une procédure d'authentification ad hoc (par exemple, configuration explicite de la liste des relais par l'administrateur habilité du serveur, récupération de la liste auprès d'un serveur AAA (pour « Authentication, Authorization and Accounting » en anglais), etc.).

Dans le mode de réalisation décrit ici, le dispositif client 3 est configuré pour établir avec les dispositifs serveurs 4-1, ..., 4-N des services de protection SP1, ..., SPN (ou des relais DOTS localisés dans les domaines informatiques hébergeant les dispositifs serveurs 4-1, ..., 4-N) des sessions DOTS sécurisées conformément à la spécification IETF précitée intitulée « Distributed Denial-of-Service Open Threat Signaling (DOTS) Signal Channel Spécification ». En particulier, les sessions sont établies ici en utilisant le protocole DTLS (pour « Datagram Transport Layer Security » en anglais), ou le protocole TLS (pour « Transport Layer Security » en anglais). Les détails des échanges TLS/DTLS et ceux concernant la gestion d'éventuelles clés de sécurité ne sont pas reproduits ici.

En outre, dans le mode de réalisation décrit ici, on suppose que les différents agents DOTS (clients, serveurs et relais) impliqués (c'est-à-dire le dispositif client DOTS 3 et les dispositifs serveurs DOTS 4-1, ..., 4-N ou relais entre ces dispositifs DOTS) sont configurés pour s'authentifier mutuellement. On s'assure ainsi que les messages DOTS reçus d'une machine usurpant l'identité d'un dispositif serveur DOTS 4-1, ..., 4-N légitime sont rejetés par le dispositif client 3 DOTS. De la même manière, les demandes de dispositifs clients DOTS non-autorisés à accéder au service offert par le dispositif serveur DOTS 4-1, ..., 4-N considéré sont ignorées par ce dernier.

Dans le mode de réalisation décrit ici, le dispositif client 3 a l'architecture matérielle d'un ordinateur, telle que représentée à la **figure 3**. Il comprend notamment un processeur 5, une mémoire vive 6, une mémoire morte 7, une mémoire non volatile 8, et des moyens de communication 9 lui permettant notamment de communiquer, en utilisant en particulier le protocole DOTS, avec les dispositifs serveurs 4-1, ..., 4-N des services de protection SP1, ..., SPN. Ces moyens de communication 9 s'appuient sur une interface de communication filaire ou sans fil, connue en soi et non décrite plus en détail ici.

La mémoire morte 7 du dispositif client 3 constitue un support d'enregistrement conforme à l'invention, lisible par le processeur 5 et sur lequel est enregistré un programme d'ordinateur PROG3 conforme à l'invention, comportant des instructions pour l'exécution des étapes d'un procédé de coordination selon l'invention. Le programme PROG3 définit des modules fonctionnels du dispositif client 3, activés par exemple ici suite à la détection d'une attaque ciblant au moins une ressource du domaine informatique 2, et qui s'appuient ou commandent les éléments matériels 5 à 9 du dispositif client 3 cités précédemment. Ces modules comprennent notamment (cf. figure 2) :
- un module d'obtention 3A, configuré pour obtenir des plans de mitigation des services de protection parmi la pluralité de services de protection SP1, ..., SPN qui ont mis en place un plan de mitigation en réponse à l'attaque détectée ;
- un module de détection 3B, configuré pour détecter l'existence d'au moins une incompatibilité entre des plans de mitigation obtenus par le module d'obtention 3A ; et
- un module de coordination 3C, configuré pour coordonner, auprès des services de protection ayant mis en place les plans de mitigation incompatibles, un ajustement de tout ou partie de ces plans incompatibles de sorte à éliminer l'incompatibilité détectée.

On note que le dispositif client 3 peut également comprendre un module de détection configuré pour exécuter une fonction de détection d'attaque DDoS. Dans le mode de réalisation décrit ici, on suppose toutefois que cette fonction de détection d'attaque DDoS est hébergée par un autre dispositif 10 du domaine informatique 2 (cf. figure 2).

Les différentes fonctions mises en oeuvre par les modules 3A à 3C du dispositif client 3 sont détaillées davantage ultérieurement.

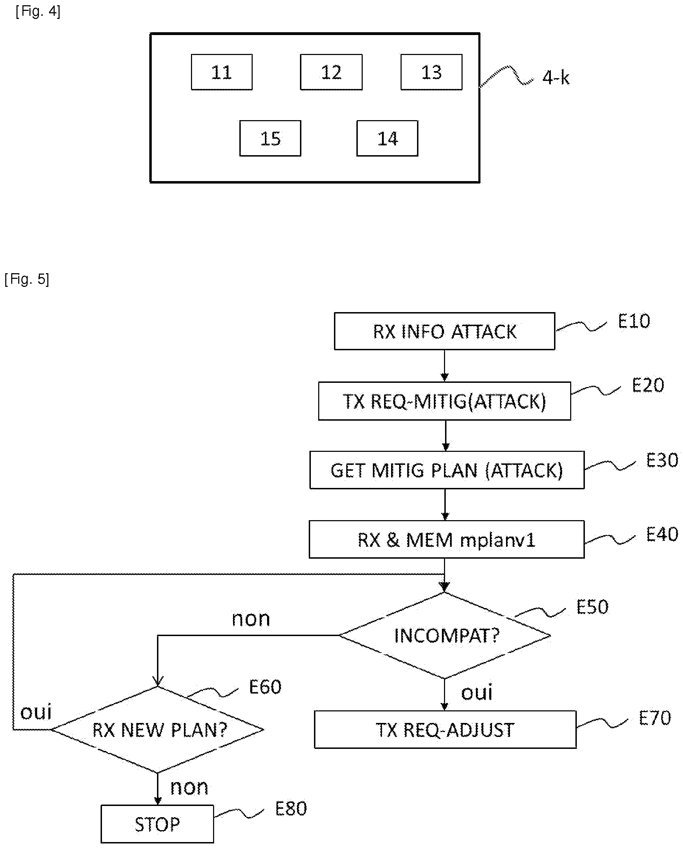

De façon similaire, dans le mode de réalisation décrit ici, chaque dispositif serveur DOTS 4-1, ..., 4-N a l'architecture matérielle d'un ordinateur, telle que représentée à la **figure 4****.** Il comprend notamment un processeur 11, une mémoire vive 12, une mémoire morte 13, une mémoire non volatile 14, et des moyens de communication 15 lui permettant notamment de communiquer, en utilisant en particulier le protocole DOTS, avec le dispositif client 3. Ces moyens de communication 15 s'appuient sur une interface de communication filaire ou sans fil, connue en soi et non décrite plus en détail ici.

La mémoire morte 13 de chaque dispositif serveur 4-k, k=1,...N constitue ici un support d'enregistrement conforme à l'invention, lisible par le processeur 11 et sur lequel est enregistré un programme d'ordinateur PROG4 conforme à l'invention, comportant des instructions pour l'exécution des étapes d'un procédé de mitigation selon l'invention. Le programme PROG4 définit des modules fonctionnels du dispositif serveur 4-k, qui s'appuient ou commandent les éléments matériels 11 à 15 cités précédemment, et qui comprennent notamment (cf. figure 2) :
- un module d'application 4A, activé suite à la détection d'une attaque ciblant au moins une ressource du domaine informatique protégée par le service de protection SPk ou dont le trafic est acheminé en impliquant au moins une ressource protégée par le service de protection SPk. Le module d'application 4A est configuré pour mettre en place un plan de mitigation contre ladite attaque. Un tel plan de mitigation peut être conçu de manière connue en soi à partir d'une connaissance des caractéristiques de l'attaque, et comprend une ou plusieurs règles permettant d'identifier et de traiter le trafic de l'attaque ;
- un module d'ajustement 4B, activé suite à la détection d'au moins une incompatibilité par le dispositif client 3 entre le plan de mitigation mis en place par le module d'application 4A et au moins un autre plan de mitigation mis en place contre ladite attaque par un autre service de protection SPj, j=1...N et j≠k de ladite pluralité de services de protection. Ce module d'ajustement 4B est configuré pour ajuster le plan de mitigation mis en place par le service de protection SPk afin d'éliminer ladite incompatibilité ; et
- un module d'envoi 4C, configuré pour envoyer le plan de mitigation ajusté au dispositif client 3.

Les différentes fonctions mises en oeuvre par les modules 4A à 4C de chaque dispositif serveur 4-k, k=1...N sont détaillées davantage ultérieurement. On note que par souci de simplification, les modules 4A à 4C des dispositifs serveurs 4-k, k=1...N ne sont représentés sur la figure 2 que pour le dispositif serveur 4-1.

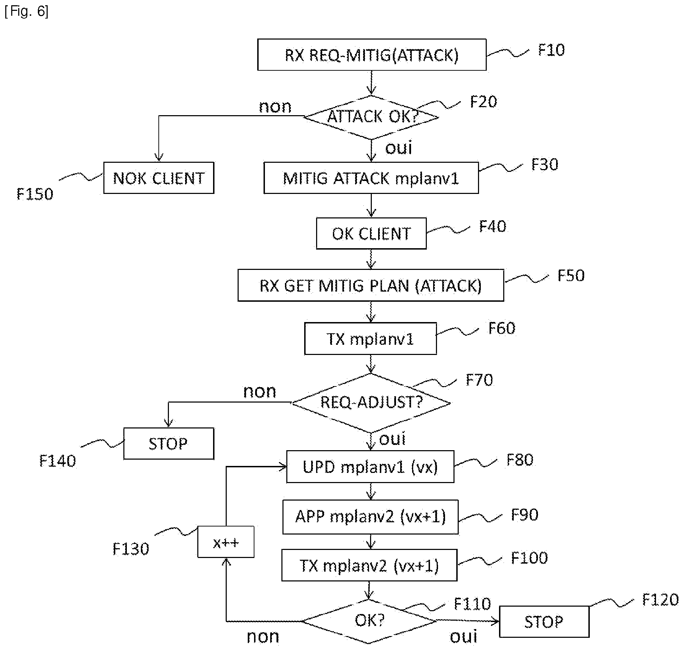

Nous allons maintenant décrire, en référence aux **figures 5** **et** **6****,** les principales étapes mises en oeuvre respectivement par le dispositif client 3 et par les dispositifs serveur 4-k, k=1... N pour améliorer la gestion des attaques informatiques ciblant des ressources du domaine informatique 2 conformément à l'invention. La figure 5 illustre plus particulièrement les étapes d'un procédé de coordination selon l'invention, telles que mises en oeuvre par le dispositif client 3 dans un mode particulier de réalisation. La figure 6 illustre les étapes d'un procédé de mitigation selon l'invention telles que mises en oeuvre par chaque dispositif serveur 4-k d'un service de protection SPk sollicité par le dispositif client 3 pour traiter une attaque, dans ce mode particulier de réalisation.

En référence à la figure 5, on suppose ici qu'une attaque informatique ATTACK sur une ou plusieurs ressources du domaine informatique 2 a été détectée par la fonction de détection 10 d'attaques informatiques, de façon connue en soi. Cette attaque est signalée par la fonction de détection 10 au dispositif client 3 (étape E10). Lors de ce signalement, la fonction de détection 10 fournit diverses informations sur l'attaque ATTACK au dispositif client 3, comme par exemple les caractéristiques du trafic de l'attaque (adresse(s) source, adresse(s) destination, identifiant(s) de protocoles (par exemple ICMP (pour Internet Control Message Protocol), TCP (pour Transmission Control Protocol), etc.), la nature de l'attaque (ici attaque DDoS), etc. Ces informations peuvent être complétées par des informations de volumétrie du trafic d'attaque, obtenues par exemple par la fonction 10 via la collecte de compteurs SNMP (pour Simple Network Management Protocol) sur les interfaces incriminées.

Sur réception de ce signalement, le dispositif client 3 envoie une requête DOTS à tout ou partie des dispositifs 4-1, ..., 4-N pour signaler l'attaque informatique ATTACK détectée et leur demander de l'aide pour résoudre cette attaque. La requête DOTS envoyée est par exemple une requête DOTS de mitigation « Request Mitigation », connue de l'état de la technique, et similaire ou identique à la requête donnée à titre illustratif dans la table 1. Elle est envoyée par le dispositif client 3 à tous les dispositifs serveurs 4-1, ..., 4-N ou seulement aux dispositifs serveurs parmi les dispositifs serveurs 4-1, ..., 4-N protégeant les ressources ciblées par l'attaque ou impliquées dans l'acheminement du trafic de l'attaque vers le domaine informatique 2. Cet envoi peut être effectué en parallèle vers chacun des dispositifs serveurs ou séquentiellement.

A titre uniquement illustratif, on suppose ici que les services de protection SP1 et SP2 protègent les ressources ciblées par l'attaque ATTACK détectée ou impliquées dans l'acheminement du trafic de l'attaque vers le domaine informatique 2, et que la requête DOTS est envoyée par le dispositif client 3 aux dispositifs serveurs 4-1 et 4-2 seulement.

En référence à la **figure 6****,** les dispositifs serveurs contactés 4-1 et 4-2 (étape F10) par le dispositif client 3, et qui sont en mesure de traiter cette attaque (réponse oui à l'étape test F20), acquittent la requête de mitigation de l'attaque reçue du dispositif client 3 en lui envoyant un message DOTS « 2.01 Created » (étape F30). Par « en mesure de traiter cette attaque » ou « capable de traiter cette attaque », on entend ici que le dispositif serveur a la capacité fonctionnelle (c'est-à-dire qu'il connait l'attaque, sait comment l'identifier et la traiter) et dispose des ressources matérielles et/ou logicielles (en quantité appropriée) pour la traiter.

En outre, chaque dispositif serveur d'un service de protection capable de traiter l'attaque met en place, via son module d'application 4A, un plan de mitigation pour traiter le trafic destiné au domaine informatique 2 dont il a la visibilité (autrement dit destiné ou passant par les ressources du domaine informatique 2 dont il assure la protection) (étape F30). Il informe le dispositif client 3 qu'il a mis en place avec succès un plan de mitigation contre l'attaque (étape F40). L'élaboration et la mise en place d'un tel plan de mitigation dès lors qu'un service de protection dispose d'une connaissance des caractéristiques de l'attaque et des capacités nécessaires pour la traiter sont connues en soi et ne sont pas décrites plus en détail ici.

Dans l'exemple illustratif introduit précédemment, on suppose que le service de protection SP1 est en mesure de traiter l'attaque, met en place avec succès un plan de mitigation mplanv1(SP1) contre cette attaque et en informe le dispositif client 3. On suppose également que le service de protection SP2 est en mesure de traiter l'attaque, met en place avec succès un plan de mitigation mplanv1(SP2) contre cette attaque et en informe le dispositif client 3.

En référence à la figure 5, le dispositif client 3 demande aux services de protection SP1 et SP2 ayant mis en place un plan de mitigation contre l'attaque de lui fournir ces plans de mitigation (étape E30). A cet effet, il envoie par exemple, à chaque dispositif serveur concerné, une requête DOTS GET contenant un attribut (« Uri-Path »), introduit pour les besoins de l'invention et appelé ici « mplan ». Un exemple d'une telle requête est fourni à titre illustratif dans la table 3 reproduite ci-dessous.

**[Table 3]**

| |
|---|
| ```
Header: GET (Code=0.01)
Uri-Path: ".well-known"
Uri-Path: "dots"
Uri-Path: "mitigate"
Uri-Path: "cuid=dz6pHjaADkaFTbjr0JGBpw"
Uri-Path: "mid=12332"
Uri-Path: "mplan"
``` |

La requête peut comprendre un identifiant de mitigation de l'attaque, « mid » (pour « Mitigation IDentifier »), supposé égal ici pour l'attaque ATTACK à « 12332 ». Si cet identifiant n'est pas renseigné dans la requête alors, dans le mode de réalisation décrit ici, le dispositif serveur doit communiquer tous les plans de mitigation de l'ensemble des actions de mitigation en cours d'exécution par le service de protection associé.

Sur réception de cette requête (étape F50), le dispositif serveur fournit au dispositif client 3, via son module d'application 4A, les caractéristiques techniques du plan de mitigation mis en place contre l'attaque ATTACK (ou de l'ensemble des plans de mitigation en cours d'exécution si aucun identifiant de mitigation d'attaque n'est précisé dans la requête GET) (étape F60). Le plan de mitigation est fourni sous la forme d'une liste (qui peut être ordonnée) comprenant une ou plusieurs règles, chaque règle définissant (c'est-à-dire identifiant) le trafic que l'on souhaite traiter (par exemple le trafic identifié comme suspect), et la ou les actions devant être appliquées au trafic identifié par la règle. De telles actions sont par exemple, un rejet du trafic défini par la règle associée à l'action, une redirection du trafic, une limitation du débit du trafic, etc.

Un exemple de réponse fournie par le dispositif serveur est illustré à la table 4.

**[Table 4]**

| |
|---|
| ```
{
                 "ietf-dots-signal-channel:mitigation-scope": {
                  "scope": [
                   {"mid": 12332,
                    "mitigation-start": "1507818434",
                    "lifetime": 989,
                    "status" : "attack-successfully-mitigated",
                    "mplan": {
                     ... (cf. table 5)
                   }
                 }
               ]
             }
           }
``` |

Selon cet exemple, le plan de mitigation est fourni dans l'attribut « mplan », dans le corps de la réponse. L'attribut « mplan » peut être structuré selon un formalisme similaire ou identique à celui des listes ACL (Access Control Lists) définies dans le protocole DOTS, ou selon une chronologie ECA (Event, Condition, Action), etc. A titre illustratif, un exemple de plan de mitigation est donné ci-après dans la table 5.

**[Table 5]**

| |
|---|
| ```
                 "mplan": {
                         "ace": [ {
                           "name": "rule1",
                           "matches": {
                             "ipv4": {
                              "destination-ipv4-network": "1.2.3.0/24",
                              "source-ipv4-network": "192.0.2.0/24"
                             }
                           },
                           "actions": {
                             "forwarding": "drop"
                           }
                         }
                       ]
                     }
                   }
``` |

Le plan décrit dans la table 5 contient une entrée ACE (pour « Access Control Entry »), c'est-à-dire une action de filtrage dont le nom est « rule1 » : cette action consiste à rejeter (comme l'indique la clause « forwarding » positionnée à « drop » pour rejeter le trafic émis par la source identifiée par le préfixe 192.0.2.0/24 et sans que celle-ci soit informée de ce rejet) tout le trafic défini par l'attribut « matches », à savoir ici le trafic émis depuis n'importe quelle adresse du réseau associé au préfixe "192.0.2.0/24" et à destination des ressources associées au préfixe "1.2.3.0/24".

On note qu'un plan de mitigation peut en variante inclure plusieurs entrées ACE ; en effet, des actions distinctes telles que la redirection, la réduction de débit, etc. peuvent être exécutées par un même service de mitigation en réponse à une attaque.

Dans la suite de la description, un plan de mitigation est identifié selon le formalisme suivant : mplanvx=LIST_RULES(match, action, ...), LIST_RULES désignant une liste de règles, chaque règle étant définie par une ou plusieurs conditions (« match ») permettant d'identifier le trafic concerné par la règle, et une ou plusieurs actions (« action ») préconisées par la règle pour le trafic ainsi identifié, vx, x=1,2,... fait référence à la version du plan de mitigation considéré, v1 désignant le plan initialement mis en place par le service de protection, v2, v3, etc., des versions ajustées ou mises à jour de ce plan.

Le dispositif client 3 mémorise localement, par exemple dans sa mémoire non volatile 8, tous les plans de mitigation reçus des services de protection compétents pour traiter l'attaque ATTACK en association avec les dispositifs serveurs et/ou les services de protection lui ayant fourni ces plans (étape E40). Dans la suite de la description, on désigne par mplanv1(SPk,mid#j) le plan de mitigation mis en place initialement par le service de protection SPk (et son dispositif serveur 4-k) en réponse à l'attaque identifiée par l'identifiant de mitigation d'attaque mid#j, j désignant un entier supérieur à 1. On note que des identifiants de mitigation distincts peuvent être utilisés pour une même attaque pour faciliter la gestion des plans de mitigation pendant ou après leur exécution.

Ainsi, dans l'exemple illustratif envisagé ici, le dispositif client 3 reçoit et mémorise, dans sa mémoire non volatile 8, le plan de mitigation obtenu du dispositif serveur 4-1 sous la forme mplanv1(SP1,mid=12332) et le plan de mitigation obtenu du dispositif serveur 4-2 sous la forme mplanv1(SP2,mid=12332), 12332 désignant l'identifiant de mitigation de l'attaque ATTACK.

On note que dans le mode de réalisation décrit ici, les plans de mitigation mis en place le cas échéant par les services de protection SPk, k=1,..., N sont obtenus par le dispositif client 3 suite à la détection de l'attaque ATTACK. En variante, on peut envisager que le dispositif client 3 sollicite les services de protection SPk, k=1,..., N de façon décorrélée par rapport à la détection d'une attaque ATTACK, ou suite à la détection d'une anomalie dans le domaine informatique 2 (par exemple une boucle de routage entre les domaines transitaires, la perte de trafic entrant/sortant du domaine informatique 2, la dégradation des services accessibles au domaine, etc.).

Dans une autre variante encore, on peut envisager que le dispositif client 3 souscrive auprès des services de protection SPk, k=1,...,N à un service de notifications des différentes actions de mitigation mises en oeuvre par ces derniers pour protéger les ressources du domaine informatique 2, et/ou de la mise à jour ou de l'évolution de ces actions (cessation de l'action, mise en place d'action(s) de mitigation additionnelle(s), etc.).

A l'issue de l'étape E40 d'obtention des plans de mitigation de l'attaque ATTACK mis en place le cas échéant par les différents services de protection sollicités, le dispositif client 3 vérifie, au moyen de son module de détection 3B, si les plans de mitigation obtenus sont compatibles entre eux (étape test E50).

A cet effet, le dispositif client 3 analyse le contenu des différents plans de mitigation obtenus, et plus particulièrement ici de chaque règle de chaque plan de mitigation obtenu et détermine si ces règles sont cohérentes entre elles ou présentent au contraire des anomalies (soit dans les règles elles-mêmes ou dans les conséquences de l'application de ces règles sur le trafic). Différents aspects peuvent être pris en considération durant cette analyse, et faire l'objet d'une revue automatique par le module de détection 3B.

Ainsi, cette analyse peut comprendre par exemple, pour des règles présentées sous la forme d'un couple (« match », « action »), tel qu'introduit précédemment, la comparaison des actions de mitigation préconisées dans les différents plans de mitigation obtenus correspondant à une même identification du trafic (c'est-à-dire aux mêmes paramètres « match » spécifiés par les règles comparées entre elles). Si les actions de mitigation sont différentes (filtrage du trafic par exemple dans un plan et au contraire, envoi du trafic identifié par les paramètres « match » vers le domaine informatique 2), elles peuvent être symptomatiques d'une anomalie : une analyse plus approfondie de ces actions différentes peuvent permettre au module de détection 3B de détecter une incompatibilité.

Par exemple, le module de détection 3B peut examiner si ces actions de mitigation différentes sont susceptibles de provoquer une boucle de routage telle qu'illustrée à la figure 1, empêchant le trafic légitime d'être acheminé vers le domaine informatique 2.

Selon un autre exemple, le module de détection 3B peut examiner si ces actions différentes proviennent d'une incohérence au niveau des protocoles filtrés par les services de protection : si l'un des services de protection ne propose que des règles filtrant des préfixes IPv4, alors que l'autre service de protection préconise des règles de filtrage de préfixes IPv6 et que le domaine informatique 2 n'utilise lui-même que des préfixes IPv6 sans avoir recours à une fonction de traduction d'adresses IPv6 en adresses IPv4 et inversement, une incompatibilité est détectée par le module de détection 3B. Cette incompatibilité révèle une incohérence dans le plan de mitigation proposé par le service de protection ne filtrant que des préfixes IPv4. Ceci peut bien entendu s'appliquer à d'autres protocoles, comme par exemple à des protocoles de transport (l'un filtre un trafic utilisant le protocole UDP, l'autre le protocole TCP par exemple, etc.).

Des actions différentes peuvent également révéler une caractérisation partielle du trafic de l'attaque par l'un des services de protection. Par exemple, l'un des services de protection conclut de son analyse de l'attaque que celle-ci implique plusieurs protocoles (tels que NTP (Network Time Protocol) et DNS (Domain Name System)), alors qu'un autre service de protection sollicité n'a identifié que le trafic suspect reposant sur le protocole DNS.

Bien entendu, ces exemples ne sont donnés qu'à titre illustratif. L'homme du métier sait configurer un tel module de détection 3B pour lui permettre de détecter automatiquement certaines anomalies dans les règles des plans de mitigation qui lui sont fournis ou dans les conséquences de l'application de ces règles sur le trafic, à partir de descriptifs de ces anomalies fournis préalablement au module de détection 3B. Il n'est pas exclu de faire évoluer dynamiquement ces descriptifs en fournissant au module de détection 3B de nouveaux descriptifs au fil du temps. Typiquement, la détection d'anomalie peut être enrichie en utilisant des techniques d'apprentissage (Machine Learning).

Si lors de l'analyse effectuée par le module de détection 3B, aucune incompatibilité entre les contenus des plans de mitigation mis en place pour traiter l'attaque ATTACK et obtenus par le dispositif client 3 n'est détectée (réponse non à l'étape test E50), le dispositif client 3 se place dans un état d'attente d'un nouvel événement à traiter, par exemple ici de la réception d'un ou de nouveaux plans de mitigation (ces nouveaux plans pouvant résulter de la détection d'une nouvelle attaque, ou d'un ajustement ou d'une mise à jour de plans de mitigation dont le dispositif client 3 dispose déjà), etc. (étape test E60).

Si au moins une incompatibilité entre au moins deux plans de mitigation proposés par des services de protection distincts est détectée (réponse oui à l'étape test E50), le dispositif client 3, via son module de coordination 3C, coordonne auprès des services de protection à l'origine des plans de mitigation considérés comme incompatibles un ajustement de tout ou partie de ces plans pour éliminer l'incompatibilité détectée.

Dans le mode de réalisation décrit ici, pour effectuer cette coordination, le dispositif client 3 envoie, via son module de coordination 3C, à au moins un service de protection ayant mis en place un plan de mitigation détecté comme étant incompatible avec un autre, une requête d'ajustement de ce plan de mitigation incompatible (étape E70). Cette requête comprend une ou plusieurs informations caractérisant l'incompatibilité détectée.

Plus particulièrement, selon une première variante de réalisation, le dispositif client 3 sélectionne au moins l'un des services de protection « en conflit » (c'est-à-dire l'un des services de protection ayant mis en place des plans incompatibles) et notifie au dispositif serveur de ce dernier l'incompatibilité détectée entre les plans de mitigation (par exemple l'existence d'une boucle de routage). Le service de protection notifié peut être sélectionné arbitrairement par le module de coordination 3C parmi les services de protection en conflit, ou on peut envisager que le module de coordination 3C sélectionne un (ou plusieurs) service de protection selon un critère prédéterminé tel que l'efficacité de son plan de mitigation. Le module de coordination 3C peut par exemple sélectionner le service de protection en conflit qui a mis en place le plan de mitigation le moins efficace contre l'attaque ATTACK. Pour déterminer l'efficacité du plan de mitigation mis en place par chaque service de protection, le module de coordination 3C peut s'appuyer sur diverses informations disponibles localement, telles que par exemple des relevés d'échantillons IPFIX, des compteurs de fragments ou du nombre d'erreurs observées sur certains routeurs, le temps de connexion ou plus généralement l'accès à certains services, l'état de congestion de certains liens, etc.

Pour informer chaque dispositif serveur du service de protection sélectionné de l'incompatibilité détectée et lui demander d'ajuster son plan de mitigation, le dispositif client 3 peut utiliser une requête DOTS de mitigation « Request Mitigation » telle que décrite précédemment, avec un nouvel attribut DOTS introduit pour les besoins de l'invention, nommé ici « thirdparty-dps-conflict », visant à requérir un ajustement, autrement dit une mise à jour du plan de mitigation mis en place par le service de protection en question. Cette requête de mitigation comprenant l'attribut « thirdparty-dps-conflict » constitue une requête d'ajustement au sens de l'invention. Elle contient par ailleurs des informations permettant de caractériser l'incompatibilité détectée, comme par exemple tout ou partie des plans de mitigation présentant une incompatibilité avec celui ou ceux du service de protection sélectionné(s) (typiquement les règles et les actions en conflit ou des références à ces règles et à ces actions).

En référence à la figure 6, sur réception d'une telle requête d'ajustement lui notifiant une incompatibilité avec un autre plan de mitigation de l'attaque ATTACK (réponse oui à l'étape test F70), le dispositif serveur ajuste (c'est-à-dire modifie, met à jour), par l'intermédiaire de son module d'ajustement 4B, son plan de mitigation pour éliminer l'incompatibilité (étape F80). Cet ajustement consiste à modifier le plan de mitigation en fonction des informations remontées par le dispositif client 3. Par exemple, si une boucle de routage a été signalée, l'ajustement consiste à modifier la politique de redirection de trafic appliquée par le dispositif serveur pour éliminer cette boucle. Des actions de reconfiguration peuvent alors être mises en place à l'aide de mécanismes tels que BGP Flowspec ou par la configuration directe des équipements à l'aide de protocoles tels que NETCONF.

On note que sur réception de la requête d'ajustement, le dispositif serveur peut procéder, avant de modifier les actions de mitigation qu'il a mises en place, à une vérification de l'incompatibilité remontée par le dispositif client 3. Selon le résultat de cette vérification, le dispositif serveur peut rejeter la demande d'ajustement formulée par le dispositif client 3 et confirmer auprès de ce dernier son plan de mitigation initial. Le dispositif client 3 peut alors contacter un autre service de protection pour tenter d'éliminer l'incompatibilité détectée.

On note également que l'ajustement à proprement parler des actions de mitigation mises en place par le service de protection peut être effectué par un serveur de mitigation externe au dispositif serveur.

Dans le mode de réalisation décrit ici, chaque dispositif serveur DOTS est configuré pour activer (c'est-à-dire mettre en place) le plan de mitigation qu'il a élaboré contre une attaque sans attendre de vérification de la part du dispositif client DOTS 3. Il découle de cette configuration que le dispositif serveur met également en place son plan de mitigation ajusté, nommé ici mvplan2, en remplacement du plan de mitigation mvplan1 sans attendre la confirmation du dispositif client DOTS 3 (étape F90).

En variante, on peut envisager que le dispositif client DOTS demande au dispositif serveur DOTS une vérification préalablement à la mise en place par ce dernier du plan de mitigation qu'il a élaboré (et donc le cas échéant du plan de mitigation ajusté). Pour ce faire, un nouvel attribut, nommé par exemple « explicit-check » (de type booléen) peut être défini. Cet attribut peut être inclus soit dans la requête de mitigation initiale envoyée par le dispositif client 3 au dispositif serveur soit dans une requête d'ajustement de son plan de mitigation le cas échéant. Par exemple, si l'attribut « explicit-check » est positionné à « True », alors le dispositif serveur doit attendre la confirmation explicite du dispositif client 3 avant l'activation de son plan de mitigation. Un dispositif client peut communiquer son accord pour exécuter un plan en envoyant la même requête de mitigation mais avec la valeur de l'attribut « explicit-check » positionnée à « False ».

En variante, le dispositif serveur peut considérer que l'accord (et la vérification) du dispositif client est implicite dès lors qu'il n'a pas reçu dans une période de temps prédéterminé de notification d'un désaccord du dispositif client.

Puis le dispositif serveur envoie, via son module d'envoi 4C, son plan ainsi ajusté mplanv2 au dispositif client 3 (étape F100).

Sur réception du plan de mitigation ajusté « mplanv2 » (réponse « oui » à l'étape test E60), le dispositif client 3 par l'intermédiaire de son module de coordination 3C vérifie si l'incompatibilité détectée précédemment est effectivement résolue et si aucune autre incompatibilité n'a été créée du fait de l'ajustement du plan de mitigation (étape test E50).

Si l'incompatibilité initialement détectée n'est pas résolue par le plan de mitigation ajusté ou si une nouvelle incompatibilité est détectée (réponse « oui » à l'étape E50), les étapes d'envoi E70 et de vérification E50 sont réitérées jusqu'à ce qu'il n'y ait plus d'incompatibilité détectée par le module de coordination 3C du dispositif client 3 entre les plans de mitigation mis en place contre l'attaque ATTACK (qu'ils soient originaux ou ajustés). Du côté du dispositif serveur, de façon similaire (réponse « non » à l'étape test F110), les étapes F70 de réception d'une requête d'ajustement, F80 d'ajustement du plan de mitigation, F90 de mise en place du plan de mitigation ajusté en remplacement du plan de mitigation précédent et F100 d'envoi du plan de mitigation mis à jour sont réitérées (étape d'incrémentation de la version x du plan de mitigation F130). On note toutefois que ce n'est pas nécessairement le même dispositif serveur qui est contacté par le dispositif client 3 à chaque itération pour mettre à jour son plan de mitigation.

Sinon (réponse « non » à l'étape E50), le plan de mitigation ajusté « mplanv2 » est validé (réponse « oui » à l'étape test F110). En d'autres termes, le dispositif serveur peut continuer d'appliquer son plan de mitigation ajusté « mplanv2 » contre l'attaque ATTACK, à la place du plan de mitigation mplanv1 précédemment proposé (étape de fin du procédé F120).

Selon une deuxième variante, le dispositif client 3 contacte tous les dispositifs serveurs des services de protection impliqués dans l'incompatibilité détectée pour leur demander d'ajuster leurs plans de mitigation. Il peut à cet effet utiliser une requête de mitigation « Request Mitigation » avec un attribut « thirdparty-dps-conflict » telle que décrite dans la première variante.

Sur réception de cette requête (réponse « oui » à l'étape test F70), chaque dispositif serveur procède à un ajustement de son plan de mitigation pour résoudre l'incompatibilité détectée (étape F80) met en place son plan de mitigation ajusté (étape F90) et le transmet au dispositif client 3 (étape F100), comme décrit dans la première variante. Le dispositif client 3 vérifie la compatibilité des plans de mitigation ajustés (réponse « oui » à l'étape E60 et étape E50) et en cas d'incompatibilité, procède de nouveau à un ajustement selon la première variante ou la deuxième variante.

La modification des plans de mitigation mis en place par les services de protection contre l'attaque ATTACK peut résulter d'un ajustement requis par le dispositif client 3, mais elle peut également résulter d'une mise à jour réalisée à l'initiative des dispositifs serveurs associés à ces services de protection eux-mêmes, par exemple en réponse à une évolution de l'attaque ATTACK dans le temps ou sur détection par les dispositifs serveurs de règles inefficaces ou devant être complétées, etc. Aucune limitation n'est attachée à la raison pour laquelle une telle mise à jour peut être envisagée par l'un ou l'autre des dispositifs serveurs.

Pour détecter une telle mise à jour, le dispositif client 3 peut contacter, par exemple à fréquence régulière, les dispositifs serveurs 4-k, k=1,...,N pour vérifier si une modification a été apportée à leurs plans de mitigation, et le cas échéant, procéder à la vérification de la compatibilité des mises à jour avec les plans de mitigation existants, comme décrit précédemment à l'étape E50.

Alternativement, chaque dispositif serveur peut notifier de sa propre initiative le dispositif client 3 d'une mise à jour de son plan de mitigation.

Si une incompatibilité entre les plans de mitigation mis en place contre l'attaque ATTACK est détectée par le dispositif client 3 suite à une mise à jour de l'un d'entre eux, le dispositif client 3 procède comme décrit précédemment en référence aux étapes E50-E70. Il en est de même des dispositifs serveurs concernés qui mettent alors en oeuvre les étapes F70-F130 décrites précédemment.

L'invention offre ainsi une solution efficace permettant de valoriser l'utilisation d'une pluralité de services de protection pour protéger les ressources d'un domaine informatique client. Cette invention s'appuie avantageusement sur la visibilité dont dispose le domaine informatique client pour coordonner les actions des services de protection.

Dans un mode particulier de réalisation, le rôle de coordination du dispositif client 3 précédemment décrit peut être avantageusement étendu de sorte à lui permettre, en outre, de gérer une incapacité de l'un des services de protection à traiter l'attaque ATTACK.

Dans l'exemple illustratif envisagé, supposons que le service de protection SP3 est chargé de protéger une ressource ciblée par l'attaque ATTACK ou impliquée dans l'acheminement du trafic de l'attaque vers le domaine informatique 2, et que le service de protection SP3 est incapable de traiter l'attaque ATTACK (réponse « non » à l'étape test F20). Aucune limitation n'est attachée aux raisons pour lesquelles un service de protection peut s'avérer incapable de traiter une attaque ; on peut envisager par exemple les raisons suivantes :
- l'attaque ATTACK est méconnue du service de protection SP3, autrement dit, il ne dispose pas de moyens d'identifier le trafic de l'attaque et/ou ne sait pas comment traiter cette attaque. Le service de protection SP3 n'est donc pas capable de mettre en oeuvre un plan de mitigation adapté en réponse à l'attaque détectée ; ou
- le service de protection SP3 connaît l'attaque mais souffre d'une insuffisance de ressources disponibles pour traiter l'attaque (problème capacitaire, par manque de ressources adéquates et/ou de ressources en quantité suffisante pour traiter l'attaque, par exemple si celle-ci est de grande ampleur).

En réponse à la requête reçue du dispositif client 3 lors de l'étape F10, le dispositif serveur 4-3 du service de protection SP3 notifie alors le dispositif client 3 de cette incapacité, en lui transmettant un message d'erreur en réponse à sa requête de mitigation « 5.03 (Service Unavailable) » (étape F150 de la figure 6). Le message d'erreur « 5.03 (Service Unavailable) » peut comprendre avantageusement, dans un paramètre « status » introduit dans le protocole DOTS pour les besoins de l'invention, la cause de l'erreur c'est-à-dire la raison de l'incapacité du service de protection SP3 (par exemple « status=unknown-attack » en cas d'incapacité fonctionnelle ou « status=attack-ex-ceeded-capacity » en cas d'insuffisance capacitaire).

Grâce à la présence du paramètre « status » ainsi valorisé, le dispositif client 3 peut détecter non seulement l'incapacité du service de protection SP3 à traiter l'attaque ATTACK, mais également déterminer la cause de cette incapacité en examinant la valeur du paramètre « status ».

En variante, le dispositif client 3 peut détecter cette incapacité autrement que par une information reçue directement du dispositif serveur 4-3. Par exemple, le dispositif client 3 peut détecter (directement ou indirectement par le biais d'une information reçue d'une autre entité du domaine informatique 2 ou par une entité externe) que le domaine informatique 2 reçoit toujours le trafic de l'attaque depuis des ressources protégées par le service de protection SP3 alors qu'une demande de mitigation explicite a été émise par le dispositif client 3 vers ce dernier, etc.

Si, selon le paramètre « status » du message d'erreur, l'incapacité du service de protection SP2 provient d'une méconnaissance de l'attaque ATTACK, le dispositif client 3 sélectionne dans sa mémoire non volatile 8 l'un des plans de mitigation contre l'attaque ATTACK qu'il a reçus des autres services de protection impliqués dans son traitement, par exemple celui du service de protection SP1. Puis, il élabore à partir du plan de mitigation sélectionné un plan de mitigation adapté aux ressources protégées par le service de protection SP3.

Si les ressources du domaine informatique 2 protégées par le service de protection SP3 sont également protégées par le service de protection SP1 ayant fourni le plan de mitigation sélectionné, le plan élaboré par le dispositif client 3 peut consister en la reprise à l'identique du plan de mitigation sélectionné, ou en la reprise uniquement des règles et des actions correspondant aux ressources protégées par le service de protection SP3 (dans l'hypothèse par exemple où le service de protection SP1 protège d'autres ressources en plus de celles protégées par le service de protection SP3).

Si les ressources du domaine informatique 2 protégées par le service de protection incapable SP3 diffèrent au moins en partie des ressources du domaine informatique 2 également protégées par le service de protection SP1 ayant fourni le plan de mitigation sélectionné, le dispositif client 3 adapte le plan de mitigation fourni par le service de protection SP1 pour qu'il s'applique aux ressources protégées par le service de protection SP3. Cette adaptation peut consister notamment à adapter les règles définissant les caractéristiques du trafic traité. Par exemple, si le plan de mitigation sélectionné contient des adresses IP uniquement protégées par le service de protection SP1 alors que le service de protection SP3 protège des ressources d'interconnexion avec un autre réseau, le dispositif client 3 remplace ces adresses par celles protégées par le service de protection SP3.

Les tables 6 et 7 illustrent un exemple d'adaptation pouvant être réalisée par le dispositif client 3 pour élaborer à partir du plan de mitigation fourni par le service de protection SP1 un plan de mitigation destiné au service de protection SP3.

La table 6 ci-dessous propose à titre illustratif un exemple de plan de mitigation mplanvx(SP1,mid=12332) mis en place et fourni par le service de protection SP1.

**[Table 6]**

| |
|---|
| ```
 "mplan": {
         "ace": [ {
           "matches": {
            "ipv4": {
              "destination-ipv4-network": "1.2.3.0/24",
              "source-ipv4-network": "192.0.2.0/24"
            }
           },
           "actions": {
            "forwarding": "drop"
          }
        }
      ]
    }
``` |

La table 7 montre en caractères gras l'adaptation réalisée par le dispositif client 3 pour élaborer un plan de mitigation adapté au service de protection SP3 (changement de l'identification des ressources ciblées par l'attaque).

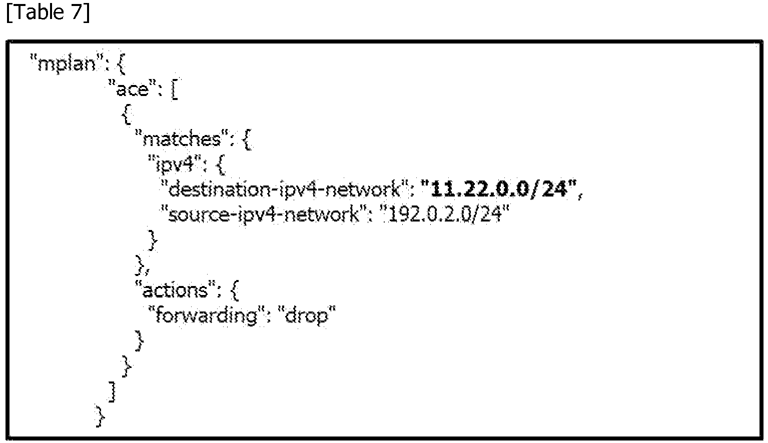

D'autres types de modifications peuvent être envisagés pour être en cohérence avec le contexte d'une mitigation.

On note que le dispositif client 3 peut sélectionner pour élaborer un plan de mitigation pour le service de protection SP3 l'un quelconque des plans de mitigation obtenus des services de protection (de manière aléatoire, le premier fourni, etc.), agréger les différents plans reçus, ou en variante tenir compte d'un critère de sélection prédéterminé, comme par exemple le plan de mitigation qui requiert le moins d'adaptation pour pouvoir convenir au service de protection incapable.

Une fois le plan de mitigation destiné au service de protection SP3 élaboré, le dispositif client 3 le transmet au service de protection SP3 et plus particulièrement au dispositif serveur 4-3 du service de protection SP3, par exemple dans une requête de mitigation DOTS « Request Mitigation » telle que décrite précédemment comprenant le plan de mitigation élaboré.

Le dispositif serveur 4-3 peut alors utiliser le plan de mitigation, directement ou en l'adaptant, pour traiter l'attaque ATTACK. Avant de mettre en place son plan de mitigation, il envoie préférentiellement la version du plan de mitigation qu'il envisage de mettre en oeuvre au dispositif client 3 pour que ce dernier vérifie sa compatibilité avec les autres plans de mitigation mis en place contre l'attaque ATTACK. Les étapes précédemment décrites pour effectuer cette vérification, et le cas échéant ajuster le plan de mitigation proposé par le service de protection 4-3 en cas d'incompatibilité, sont alors exécutées par le dispositif client 3 et par le dispositif serveur 4-3.

Si, le paramètre « status » du message d'erreur révèle une insuffisance capacitaire du service de protection SP3, sur réception du message d'erreur transmis par le dispositif serveur 4-3, le dispositif client 3 peut interroger au moins un autre service de protection parmi les services de protection protégeant des ressources du domaine informatique 2 (par exemple ici le service de protection SP1), pour déterminer s'il est apte à fournir une assistance capacitaire au service de protection SP3 pour traiter l'attaque ATTACK, par exemple en lui envoyant une requête d'assistance DOTS. On note qu'une telle requête n'existe pas dans la version actuelle du protocole DOTS et nécessite d'être définie pour les besoins de l'invention.

Le corps de cette requête d'assistance peut comprendre les attributs suivants :
- un attribut nommé ici « type » permettant au dispositif client 3 de préciser l'urgence de l'assistance requise, à savoir si l'assistance requise doit être fournie immédiatement ou de manière différée ; et
- un attribut nommé ici « required_capacity » permettant au dispositif client 3 de préciser les ressources capacitaires minimales requises pour fournir une assistance au service de protection incapable SP3 (notamment la quantité et la nature des ressources requises).

Cette liste d'attributs n'est aucunement exhaustive ni limitative en soi. D'autres attributs peuvent être envisagés en variante ou en complément des attributs précités.

Sur réception d'une telle requête d'assistance par le dispositif serveur 4-1, celui-ci vérifie si le service de protection SP1 a la capacité nécessaire pour la mise en place de l'assistance requise. Si tel est le cas et si le service de protection SP1 accepte de fournir cette assistance, le dispositif serveur 4-1 répond au dispositif client 3 avec un message de réponse DOTS « 2.01 Created », dans lequel il inclut des informations pour la mise en place de l'assistance que propose de fournir le service de protection SP1. En particulier, dans le mode de réalisation décrit ici, un attribut nommé par exemple « Scrubbing_Endpoint(s) » est inclus dans le corps du message de réponse et contient l'adresse ou les adresses IP (ou le ou les noms de domaines) de la ou des entités avec lesquelles le dispositif serveur 4-3 peut établir une communication pour bénéficier de l'assistance fournie par le service de protection SP3 pour résoudre l'attaque ATTACK. Une telle entité est par exemple un centre de nettoyage (plus communément appelé « scrubbing center ») du service de protection SP1 en charge du filtrage de tout ou partie du trafic suspect qui lui parvient.

D'autres informations peuvent être incluses dans la réponse, comme par exemple une capacité disponible au niveau du service de protection fournissant son assistance, une ou plusieurs clés de sécurité destinées à être utilisées lors de cette assistance (par exemple dans le cadre d'un tunnel de communication sécurisé établi entre le service de protection incapable et le service de protection fournissant son assistance), une durée de vie de l'assistance fournie par le service de protection, etc.

Sur réception des informations fournies par le service de protection SP1 se déclarant apte à fournir une assistance au service de protection SP3 incapable de traiter l'attaque, le dispositif client 3 les mémorise dans sa mémoire non volatile 8. On note qu'en fonction de la durée de vie associée le cas échéant à l'assistance proposée par le service de protection, ces informations ont vocation à être utilisées pour gérer l'attaque ATTACK et pour fournir une assistance au service de protection SP3 incapable de gérer l'attaque ATTACK, mais également ultérieurement pour ce même service de protection ou un autre, si besoin.

Puis le dispositif client 3 élabore un plan de mitigation destiné au service de protection SP3 utilisant l'assistance du service de protection SP1 et transmet le plan de mitigation ainsi élaboré au dispositif serveur 4-3. Ce plan de mitigation comprend notamment les informations fournies par le service de protection SP1 pour établir une communication entre le service de protection SP3 et le service de protection SP1 afin de lui permettre de bénéficier de l'assistance du service de protection SP1 pour le traitement de l'attaque ATTACK.

Comme décrit précédemment, sur réception de ce plan de mitigation, le dispositif serveur 4-3 met alors en place, en réponse à l'attaque ATTACK, un plan de mitigation de cette attaque utilisant l'assistance proposée par le service de protection SP1. Ce plan de mitigation consiste notamment à établir une communication pouvant être sécurisée (par exemple un tunnel sécurisé) avec la ou les entités du service de protection SP1 identifiées dans les informations fournies dans le plan de mitigation (« scrubbing center » du service de protection SP1) et à rediriger via la communication ainsi établie, tout ou partie du trafic suspect (i.e., des données suspectées d'être associées à l'attaque) vers le scrubbing center du service de protection SP1 pour traitement ou filtrage.

Le trafic suspect redirigé et acheminé vers le service de protection SP1 est alors traité par ce dernier. Le trafic considéré comme légitime peut être retourné vers le service de protection SP3 ou être acheminé directement vers le domaine informatique 2 par le service de protection SP1.

Comme décrit précédemment, le dispositif serveur 4-3 peut préférentiellement envoyer, avant sa mise en place effective, la version du plan de mitigation qu'il envisage de mettre en place au dispositif client 3 pour qu'il vérifie sa compatibilité avec les autres plans de mitigation mis en place contre l'attaque ATTACK. Les étapes précédemment décrites pour effectuer cette vérification, et le cas échéant ajuster le plan de mitigation proposé par le service de protection 4-3 en cas d'incompatibilité, sont alors exécutées par le dispositif client 3 et par le dispositif serveur 4-3.

L'invention offre ainsi une solution efficace pilotée par le domaine informatique 2 pour résoudre des attaques ciblant les ressources du domaine informatique 2, s'appuyant sur une pluralité de services de protection. Elle a une application privilégiée, mais non limitative lorsque ces services de protection sont gérés par des entités administratives distinctes, chacune de ces entités ne disposant d'aucune visibilité (c'est-à-dire pas de connaissance) sur les actions de mitigation mises en place les autres entités.

## Revendications

1. Procédé de coordination mis en oeuvre par un dispositif (3) gérant des ressources d'un domaine informatique (2), lesdites ressources étant protégées par une pluralité de services de protection (SP1,...,SPN) contre des attaques informatiques, ledit procédé comprenant :
- une étape (E30) d'obtention de plans de mitigation mis en place par des services de protection de ladite pluralité de services de protection en réponse à une attaque informatique ciblant au moins une desdites ressources du domaine informatique ; et
- suite à une détection (E50) d'au moins une incompatibilité entre des plans de mitigation obtenus, une étape de coordination (E50,E60,E70) d'un ajustement de tout ou partie de ces plans de mitigation incompatibles auprès des services de protection ayant mis en place ces plans de mitigation incompatibles, de sorte à éliminer ladite au moins une incompatibilité.

2. Procédé selon la revendication 1 dans lequel l'étape de coordination comprend :
- l'envoi (E70) à au moins un service de protection ayant mis en place un plan de mitigation incompatible, d'une requête d'ajustement de ce plan de mitigation incompatible, ladite requête comprenant au moins une information caractérisant ladite incompatibilité détectée ;
- suite à l'obtention (E60) d'au moins un plan de mitigation ajusté, une étape de vérification (E50) de sa compatibilité avec les autres plans de mitigation obtenus ;
les étapes d'envoi (E70) et de vérification (E50) étant réitérées tant qu'une incompatibilité entre des plans de mitigation obtenus subsiste.

3. Procédé selon la revendication 2 dans lequel ledit au moins un service de protection auquel est envoyée la requête d'ajustement est sélectionné selon une efficacité du plan de mitigation mis en place par ledit au moins un service de protection.

4. Procédé selon la revendication 2 dans lequel la requête d'ajustement est envoyée à tous les services de protection ayant mis en place lesdits plans de mitigation incompatibles.

5. Procédé selon l'une quelconque des revendications 2 à 4 dans lequel ladite au moins une information comprise dans la requête d'ajustement envoyée à un service de protection comprend au moins une référence à une règle du plan de mitigation mis en place par ce service de protection à l'origine de l'incompatibilité détectée.

6. Procédé selon l'une quelconque des revendications 1 à 5 dans lequel ladite incompatibilité détectée provoque une boucle de routage créée par l'application des plans de mitigation incompatibles.

7. Procédé selon l'une quelconque des revendications 1 à 6 comprenant en outre :
- une étape de détection (E60) d'une mise à jour d'au moins un des plans de mitigation obtenus ; et
- une étape de vérification (E50) d'une compatibilité de ladite mise à jour avec les autres plans de mitigation obtenus.

8. Procédé selon la revendication 7 dans lequel l'étape de détection de la mise à jour comprend l'envoi par le dispositif à au moins un service de protection ayant mis en place un plan de mitigation contre l'attaque d'un message de vérification si une mise à jour de ce plan de mitigation a été effectuée.

9. Procédé selon la revendication 8 dans lequel ledit message est envoyé à une fréquence régulière audit au moins un service de protection.

10. Procédé selon la revendication 7 dans lequel lors de l'étape de détection, le dispositif est informé d'une mise à jour d'un plan de mitigation à l'initiative du service de protection ayant effectué ladite mise à jour.

11. Procédé selon l'une quelconque des revendications 1 à 10 comprenant en outre :
- une étape de détermination d'une incapacité d'un service de protection de ladite pluralité de services de protection à traiter ladite attaque informatique ;
- une étape d'élaboration d'un plan de mitigation de ladite attaque à partir :
▪ d'un des plans de mitigation obtenus ; et/ou
▪ d'une assistance fournie par au moins un service de protection de ladite pluralité de services de protection ; et
- une étape de transmission du plan de mitigation élaboré au service de protection présentant ladite incapacité pour lui permettre de traiter ladite attaque.

12. Procédé de mitigation, par un premier service de protection d'une pluralité de services de protection contre des attaques informatiques protégeant des ressources d'un domaine informatique, ledit procédé comprenant :
- une étape (F30) de mise en place d'un plan de mitigation contre une attaque
informatique ciblant au moins une desdites ressources du domaine informatique ;
- suite à une détection, par un dispositif (3) gérant lesdites ressources du domaine informatique, d'au moins une incompatibilité entre ledit plan de mitigation et au moins un autre plan de mitigation mis en place contre ladite attaque informatique par un deuxième service de protection de ladite pluralité de services de protection :
▪ une étape d'ajustement (F80) du plan de mitigation mis en place par le premier service de protection pour éliminer l'incompatibilité ; et
▪ une étape d'envoi (F90) du plan de mitigation ajusté au dispositif gérant les ressources du domaine informatique.

13. Procédé de mitigation selon la revendication 12 dans lequel le premier service de protection met en place le plan de mitigation ajusté suite à une vérification, par le dispositif (3) gérant les ressources du domaine informatique, d'une compatibilité du plan de mitigation ajusté avec d'autres plans de mitigation mis en place contre ladite attaque.

14. Procédé de mitigation selon la revendication 12 ou 13 comprenant :
- une étape de mise à jour du plan de mitigation mis en place par le premier service de protection ; et
- une étape de notification de ladite mise à jour au dispositif gérant les ressources du domaine informatique pour vérification d'une compatibilité dudit plan de mitigation mis à jour avec d'autres plans de mitigation mis en place contre ladite attaque.

15. Programme d'ordinateur (PROG3, PROG4) comportant des instructions pour l'exécution d'un procédé selon l'une quelconque des revendications 1 à 14, lorsque ledit programme est exécuté par un ordinateur.

16. Support d'enregistrement lisible par un ordinateur sur lequel est enregistré un programme d'ordinateur selon la revendication 15.

17. Dispositif (3) gérant des ressources d'un domaine informatique, configuré pour communiquer avec une pluralité de services de protection contre des attaques informatiques protégeant lesdites ressources du domaine informatique, ledit dispositif comprenant :
- un module d'obtention (3A), configuré pour obtenir des plans de mitigation mis en place par des services de protection de ladite pluralité de services de protection en réponse à une attaque informatique ciblant au moins une desdites ressources du domaine informatique ;
- un module de détection (3B), configuré pour détecter l'existence d'au moins une incompatibilité entre des plans de mitigation obtenus ; et
- un module de coordination (3C), configuré pour coordonner un ajustement de tout ou partie de ces plans de mitigation incompatibles auprès des services de protection ayant mis en place ces plans de mitigation incompatibles, de sorte à éliminer ladite au moins une incompatibilité.

18. Dispositif (4-1) d'un premier service de protection d'une pluralité de services de protection contre des attaques informatiques protégeant des ressources d'un domaine informatique (2), ledit dispositif comprenant :
- un module d'application (4A) configuré pour mettre en place un plan de mitigation contre une attaque ciblant au moins une desdites ressources du domaine informatique ;
- un module d'ajustement (4B) et un module d'envoi (4C), activés suite à une incompatibilité détectée par un dispositif (3) gérant lesdites ressources du domaine informatique entre ledit plan de mitigation et au moins un autre plan de mitigation mis en place contre ladite attaque informatique par un deuxième service de protection de ladite pluralité de services de protection, ledit module d'ajustement étant configuré pour ajuster le plan de mitigation mis en place par le premier service de protection afin d'éliminer ladite incompatibilité, et le module d'envoi étant configuré pour envoyer le plan de mitigation ajusté au dispositif gérant les ressources du domaine informatique.

19. Système (1) de protection d'un domaine informatique comprenant :
- une pluralité de services de protection (SP1,...,SPN) contre des attaques informatiques protégeant des ressources du domaine informatique ;
- un dispositif (3) gérant lesdites ressources du domaine informatique, conforme à la revendication 17 et configuré pour communiquer avec lesdits services de protection ;
et dans lequel au moins un des services de protection comprend un dispositif (4-1,...,4-N) selon la revendication 18.

## Patentansprüche

1. Koordinationsverfahren, angewendet von einer Ressourcen eines Informatikbereichs (2) verwaltenden Vorrichtung (3), wobei die Ressourcen von einer Vielzahl von Schutzdiensten (SP1,...,SPN) vor Hackerangriffen geschützt werden, wobei das Verfahren enthält:
- einen Schritt (E30) des Erhalts von Risikominderungsplänen, die von Schutzdiensten der Vielzahl von Schutzdiensten als Antwort auf einen Hackerangriff eingesetzt werden, der auf mindestens eine der Ressourcen des Informatikbereichs abzielt; und
- nach einer Erkennung (E50) mindestens einer Inkompatibilität zwischen erhaltenen Risikominderungsplänen, einen Schritt der Koordination (E50, E60, E70) einer Anpassung aller oder eines Teils dieser inkompatiblen Risikominderungspläne bei Schutzdiensten, die diese inkompatiblen Risikominderungspläne eingesetzt haben, um die mindestens eine Inkompatibilität zu entfernen.

2. Verfahren nach Anspruch 1, wobei der Koordinationsschritt enthält:
- Senden (E70) an mindestens einen Schutzdienst, der einen inkompatiblen Risikominderungsplan eingesetzt hat, einer Anpassungsanforderung dieses inkompatiblen Risikominderungsplans, wobei die Anforderung mindestens eine Information enthält, die die erkannte Inkompatibilität charakterisiert;
- nach dem Erhalt (E60) mindestens eines angepassten Risikominderungsplans, einen Schritt der Überprüfung (E50) seiner Kompatibilität mit den anderen erhaltenen Risikominderungsplänen;
wobei die Schritte des Sendens (E70) und Überprüfens (E50) so lange wiederholt werden, wie eine Inkompatibilität zwischen erhaltenen Risikominderungsplänen verbleibt.

3. Verfahren nach Anspruch 2, wobei der mindestens eine Schutzdienst, an den die Anpassungsanforderung gesendet wird, gemäß einer Wirksamkeit des von dem mindestens einen Schutzdienst eingesetzten Risikominderungsplans ausgewählt wird.

4. Verfahren nach Anspruch 2, wobei die Anpassungsanforderung an alle Schutzdienste gesendet wird, die die inkompatiblen Risikominderungspläne eingesetzt haben.

5. Verfahren nach einem der Ansprüche 2 bis 4, wobei die mindestens eine in der an einen Schutzdienst gesendeten Anpassungsanforderung enthaltene Information mindestens einen Bezug auf eine Regel des von diesem Schutzdienst eingesetzten Risikominderungsplans enthält, der der Ursprung der erkannten Inkompatibilität ist.

6. Verfahren nach einem der Ansprüche 1 bis 5, wobei die erkannte Inkompatibilität eine Routingschleife hervorruft, die von der Anwendung der inkompatiblen Risikominderungspläne erzeugt wird.

7. Verfahren nach einem der Ansprüche 1 bis 6, das außerdem enthält:
- einen Schritt der Erkennung (EGO) einer Aktualisierung mindestens eines der erhaltenen Risikominderungspläne; und
- einen Schritt der Überprüfung (E50) einer Kompatibilität der Aktualisierung mit den anderen erhaltenen Risikominderungsplänen.

8. Verfahren nach Anspruch 7, wobei der Schritt der Erkennung der Aktualisierung das Senden, durch die Vorrichtung an mindestens einen Schutzdienst, der einen Risikominderungsplan gegen den Angriff eingesetzt hat, einer Überprüfungsnachricht enthält, ob eine Aktualisierung dieses Risikominderungsplans ausgeführt wurde.

9. Verfahren nach Anspruch 8, wobei die Nachricht mit einer regelmäßigen Frequenz an den mindestens einen Schutzdienst gesendet wird.

10. Verfahren nach Anspruch 7, wobei die Vorrichtung im Erkennungsschritt über eine Aktualisierung eines Risikominderungsplans auf Initiative des Schutzdiensts informiert wird, der die Aktualisierung ausgeführt hat.

11. Verfahren nach einem der Ansprüche 1 bis 10, das außerdem enthält:
- einen Schritt der Bestimmung einer Unfähigkeit eines Schutzdiensts der Vielzahl von Schutzdiensten, den Hackerangriff zu bearbeiten;
- einen Schritt der Erarbeitung eines Risikominderungsplans des Angriffs ausgehend von:
• einem der erhaltenen Risikominderungspläne; und/oder
• einer von mindestens einem Schutzdienst der Vielzahl von Schutzdienste bereitgestellten Assistenz; und
- einen Schritt der Übertragung des erarbeiteten Risikominderungsplans an den die Unfähigkeit aufweisenden Schutzdienst, um ihm zu ermöglichen, den Angriff zu bearbeiten.

12. Risikominderungsverfahren durch einen ersten Schutzdienst einer Vielzahl von Ressourcen eines Informatikbereichs gegen Hackerangriffe schützenden Schutzdiensten, wobei das Verfahren enthält:
- einen Schritt (F30) des Einsetzens eines Risikominderungsplans gegen einen Hackerangriff, der auf mindestens eine der Ressourcen des Informatikbereichs abzielt;
- nach einer Erkennung, durch eine die Ressourcen du Informatikbereichs verwaltende Vorrichtung (3), mindestens einer Inkompatibilität zwischen dem Risikominderungsplan und mindestens einem anderen Risikominderungsplan, der von einem zweiten Schutzdienst der Vielzahl von Schutzdiensten gegen den Hackerangriff eingesetzt wird:
• einen Schritt der Anpassung (F80) des von dem ersten Schutzdienst eingesetzten Risikominderungsplans zum Entfernen der Inkompatibilität; und
• einen Schritt des Sendens (F90) des angepassten Risikominderungsplans an die die Ressourcen des Informatikbereichs verwaltende Vorrichtung.

13. Risikominderungsverfahren nach Anspruch 12, wobei der erste Schutzdienst den angepassten Risikominderungsplan nach einer Überprüfung, durch die die Ressourcen des Informatikbereichs verwaltende Vorrichtung (3), einer Kompatibilität des angepassten Risikominderungsplans mit anderen gegen den Angriff eingesetzten Risikominderungsplänen einsetzt.

14. Risikominderungsverfahren nach Anspruch 12 oder 13, das enthält:
- einen Schritt der Aktualisierung des vom ersten Schutzdienst eingesetzten Risikominderungsplans; und
- einen Schritt der Mitteilung der Aktualisierung an die die Ressourcen des Informatikbereichs verwaltende Vorrichtung zur Überprüfung einer Kompatibilität des aktualisierten Risikominderungsplans mit anderen Risikominderungsplänen, die gegen den Angriff eingesetzt werden.

15. Computerprogramm (PROG3, PROG4), das Anweisungen zur Ausführung eines Verfahrens nach einem der Ansprüche 1 bis 14 aufweist, wenn das Programm von einem Computer ausgeführt wird.

16. Computerlesbarer Aufzeichnungsträger, auf dem ein Computerprogramm nach Anspruch 15 gespeichert ist.

17. Vorrichtung (3), die Ressourcen eines Informatikbereichs verwaltet, die konfiguriert ist, um mit einer Vielzahl von Schutzdiensten gegen Hackerangriffe zu kommunizieren, die die Ressourcen des Informatikbereichs schützen, wobei die Vorrichtung enthält:
- ein Erhaltsmodul (3A), das konfiguriert ist, um Risikominderungspläne zu erhalten, die von Schutzdiensten der Vielzahl von Schutzdiensten als Antwort auf einen Hackerangriff eingesetzt werden, der auf mindestens eine der Ressourcen des Informatikbereich abzielt;
- ein Erkennungsmodul (3B), das konfiguriert ist, um das Vorhandensein mindestens einer Inkompatibilität zwischen erhaltenen Risikominderungsplänen zu erkennen; und
- ein Koordinationsmodul (3C), das konfiguriert ist, um eine Anpassung aller oder eines Teils dieser inkompatiblen Risikominderungspläne bei Schutzdiensten zu koordinieren, die diese inkompatiblen Risikominderungspläne eingesetzt haben, um die mindestens eine Inkompatibilität zu entfernen.

18. Vorrichtung (4-1) eines ersten Schutzdiensts einer Vielzahl von Schutzdiensten gegen Hackerangriffe, die Ressourcen eines Informatikbereichs (2) schützen, wobei die Vorrichtung enthält:
- ein Anwendungsmodul (4A), das konfiguriert ist, um einen Risikominderungsplan gegen einen Angriff einzusetzen, der auf mindestens eine der Ressourcen des Informatikbereichs abzielt;
- ein Anpassungsmodul ( 4B) und ein Sendemodul (4C), die nach einer durch eine die Ressourcen des Informatikbereichs verwaltende Vorrichtung (3) erkannten Inkompatibilität zwischen dem Risikominderungsplan und mindestens einem andern Risikominderungsplan aktiviert werden, der von einem zweiten Schutzdienst der Vielzahl von Schutzdiensten gegen den Hackerangriff eingesetzt wird, wobei das Anpassungsmodul konfiguriert ist, um den vom ersten Schutzdienst eingesetzten Risikominderungsplan anzupassen, um die Inkompatibilität zu entfernen, und das Sendemodul konfiguriert ist, um den angepassten Risikominderungsplan an die die Ressourcen des Informatikbereichs verwaltende Vorrichtung zu senden.

19. System (1) zum Schutz eines Informatikbereichs, das enthält
- eine Vielzahl von Schutzdiensten (SP1,...,SPN) gegen Hackerangriffe, die Ressourcen des Informatikbereichs schützen;
- eine die Ressourcen des Informatikbereichs verwaltende Vorrichtung (3) gemäß Anspruch 17 und konfiguriert, um mit den Schutzdiensten zu kommunizieren; und wobei mindestens einer der Schutzdienste eine Vorrichtung (4-1,...,4-N) nach Anspruch 18 enthält.

## Claims

1. Coordination method, implemented by a device (3) managing resources of a computing domain (2), said resources being protected by a plurality of cyber attack protection services (SP1,...,SPN), said method comprising:
- a step (E30) of obtaining mitigation plans implemented by some protection services of said plurality of protection services in response to a cyber attack targeting at least one of said resources of the computing domain; and,
- following detection (E50) of at least one incompatibility between some of the obtained mitigation plans, a step of coordinating (E50,E60,E70) an adjustment of all or some of these incompatible mitigation plans with the protection services that implemented these incompatible mitigation plans, so as to eliminate said at least one incompatibility.

2. Method according to Claim 1, wherein the coordination step comprises:
- sending (E70), to at least one protection service that implemented an incompatible mitigation plan, a request to adjust this incompatible mitigation plan, said request comprising at least one item of information characterizing said detected incompatibility;
- after obtaining (E60) at least one adjusted mitigation plan, a step of checking (E50) its compatibility with the other obtained mitigation plans;
the sending (E70) and checking (E50) steps being reiterated for as long as there is still an incompatibility between some obtained mitigation plans.

3. Method according to Claim 2, wherein said at least one protection service to which the adjustment request is sent is selected according to an effectiveness of the mitigation plan implemented by said at least one protection service.

4. Method according to Claim 2, wherein the adjustment request is sent to all of the protection services that implemented said incompatible mitigation plans.

5. Method according to any one of Claims 2 to 4, wherein said at least one item of information contained in the adjustment request sent to a protection service comprises at least one reference to a rule of the mitigation plan implemented by this protection service at the origin of the detected incompatibility.

6. Method according to any one of Claims 1 to 5, wherein said detected incompatibility causes a routing loop created by applying the incompatible mitigation plans.

7. Method according to any one of Claims 1 to 6, furthermore comprising:
- a step (E60) of detecting an update to at least one of the obtained mitigation plans; and
- a step (E50) of checking a compatibility of said update with the other obtained mitigation plans.

8. Method according to Claim 7, wherein the step of detecting the update comprises the device sending, to at least one protection service that implemented a mitigation plan against the attack, a message checking whether an update to this mitigation plan has been performed.

9. Method according to Claim 8, wherein said message is sent regularly to said at least one protection service.

10. Method according to Claim 7, wherein, in the detection step, the device is informed of an update to a mitigation plan at the initiative of the protection service that performed said update.

11. Method according to any one of Claims 1 to 10, furthermore comprising:
- a step of determining an incapability of a protection service of said plurality of protection services to handle said cyber attack;
- a step of developing a mitigation plan for mitigating said attack based on:
▪ one of the obtained mitigation plans; and/or
▪ assistance provided by at least one protection service of said plurality of protection services; and
- a step of transmitting the developed mitigation plan to the protection service exhibiting said incapability so as to allow it to handle said attack.

12. Mitigation method, performed by a first protection service of a plurality of cyber attack protection services protecting resources of a computing domain, said method comprising:
- a step (F30) of implementing a mitigation plan against a cyber attack targeting at least one of said resources of the computing domain;
- following detection, by a device (3) managing said resources of the computing domain, of at least one incompatibility between said mitigation plan and at least one other mitigation plan implemented against said cyber attack by a second protection service of said plurality of protection services:
▪ a step (F80) of adjusting the mitigation plan implemented by the first protection service in order to eliminate the incompatibility; and
▪ a step (F90) of sending the adjusted mitigation plan to the device managing the resources of the computing domain.

13. Mitigation method according to Claim 12, wherein the first protection service implements the adjusted mitigation plan following checking, by the device (3) managing the resources of the computing domain, that the adjusted mitigation plan is compatible with other mitigation plans implemented against said attack.

14. Mitigation method according to Claim 12 or 13, comprising:
- a step of updating the mitigation plan implemented by the first protection service; and
- a step of notifying said update to the device managing the resources of the computing domain in order to check a compatibility of said updated mitigation plan with other mitigation plans implemented against said attack.

15. Computer program (PROG3, PROG4) comprising instructions for executing a method according to any one of Claims 1 to 14 when said program is executed by a computer.

16. Recording medium able to be read by a computer and on which there is recorded a computer program according to Claim 15.

17. Device (3) managing resources of a computing domain, configured so as to communicate with a plurality of cyber attack protection services protecting said resources of the computing domain, said device comprising:
- an obtainment module (3A), configured so as to obtain mitigation plans implemented by some protection services of said plurality of protection services in response to a cyber attack targeting at least one of said resources of the computing domain;
- a detection module (3B), configured so as to detect the existence of at least one incompatibility between some of the obtained mitigation plans; and
- a coordination module (3C), configured so as to coordinate an adjustment of all or some of these incompatible mitigation plans with the protection services that implemented these incompatible mitigation plans, so as to eliminate said at least one incompatibility.

18. Device (4-1) of a first protection service of a plurality of cyber attack protection services protecting resources of a computing domain (2), said device comprising:
- an application module (4A) configured so as to implement a mitigation plan against an attack targeting at least one of said resources of the computing domain;
- an adjustment module (4B) and a sending module (4C), both activated following an incompatibility, detected by a device (3) managing said resources of the computing domain, between said mitigation plan and at least one other mitigation plan implemented against said cyber attack by a second protection service of said plurality of protection services, said adjustment module being configured so as to adjust the mitigation plan implemented by the first protection service in order to eliminate said incompatibility, and the sending module being configured so as to send the adjusted mitigation plan to the device managing the resources of the computing domain.

19. Protection system (1) for protecting a computing domain comprising:
- a plurality of cyber attack protection services (SP1,...,SPN) protecting resources of the computing domain;
- a device (3) managing said resources of the computing domain according to Claim 17 and configured so as to communicate with said protection services;
and wherein at least one of the protection services comprises a device (4-1, ..., 4-N) according to Claim 18.
